(19) Europäisches Patentamt
European Patent Office
Office européen des brevets

(11) **EP 1 752 672 B1**

(12) **FASCICULE DE BREVET EUROPEEN**

(45) Date de publication et mention de la délivrance du brevet:
**13.10.2010 Bulletin 2010/41**

(51) Int Cl.:
***F16D 11/10*** *(2006.01)*  ***B64C 27/50*** *(2006.01)*

(21) Numéro de dépôt: **06016229.4**

(22) Date de dépôt: **03.08.2006**

(54) **Procédé et système de mise en coïncidence, méthode et dispositif d'entrainement et aéronef.**

Verfahren und System zur Ausrichtung, Verfahren und Antriebsvorrichtung und Flugzeug

Method and system for alignment, method and drive device and aircraft

(84) Etats contractants désignés:
**GB IT**

(30) Priorité: **12.08.2005 FR 0508549**

(43) Date de publication de la demande:
**14.02.2007 Bulletin 2007/07**

(73) Titulaires:
• **EUROCOPTER**
**13725 Marignane Cédex (FR)**
• **Artus**
**49241 Avrille (FR)**

(72) Inventeurs:
• **Louis, Charles**
**13090 Aix en Provence (FR)**

• **Leman, Jean-Luc**
**13100 Aix en Provence (FR)**
• **Quesne, Patrick**
**49000 Ecouflant (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 0 894 711     DE-C1- 10 225 886**
**US-A- 2 880 810**

**Description**

L'invention vise de façon générale la mise en coïncidence avant accouplement, d'obstacles à engager mutuellement, au sein d'une liaison prévue pour la transmission d'un mouvement de rotation.

Plus spécialement, les obstacles à accoupler ont la forme de parties saillantes d'un organe moteur, à faire concorder avec des parties concaves complémentaires d'un organe à entraîner, et inversement.

L'accouplement s'effectue ici par un rapprochement d'engagement mutuel des organes moteur et à entraîner.

Pour simplifier, l'invention est discutée dans le cadre d'un repliage des pales du rotor principal de sustentation et de propulsion d'un hélicoptère, qui pose un problème de positionnement en azimut des pales.

Ceci s'explique par le domaine d'où est issue l'invention, mais ne doit pas limiter à ce domaine, la portée de ses aspects généraux.

À l'inverse, l'invention s'applique à tout autre domaine où il est utile de pouvoir mettre en coïncidence au sein d'une liaison de transmission d'une rotation, des obstacles à accoupler.

Ceci étant dit, expliquons en préalable comment les pales du rotor principal d'entraînement d'un hélicoptère sont en général repliées.

Le document « Aérospatiale ; Super Puma AS332 ; Instruction Manual ; 21 : Optional Equipment ; Issue 1984 » expose que le repliage vise à restreindre l'encombrement d'ensemble d'un hélicoptère, ainsi qu'à en réduire la prise au vent.

Dans ce document, le repliage est manuel et nécessite l'intervention de trois opérateurs humains. Sa durée est de l'ordre de 5 à 7 minutes.

D'abord, le rotor principal doit être disposé avec ses pales agencées suivant un azimut prédéterminé, et le frein de ce rotor est engagé.

Ensuite, un verrouillage en position fonctionnelle des pales est désactivé. C'est à l'aide de cannes de maniement que les pales sont alors déplacées manuellement (par pivotement autour d'un axe d'articulation de la pale sur le moyeu du rotor).

Enfin, les pales en position repliée sont accrochées au fuselage de l'hélicoptère. Le document FR2861689 évoque aussi ce sujet.

Citons maintenant quelques documents relatifs au repliage automatique de pales de rotor principal d'hélicoptère.

Le document FR1587156 décrit un entraînement de repliage de pales d'un aéronef convertible. Deux arbres de sortie sont entraînés par l'un ou l'autre de deux moteurs, tandis que deux voies de sortie d'un mouvement linéaire opèrent un mécanisme de verrouillage des pales de rotor.

Le document GB781356 décrit un mécanisme hydraulique de repliage de pales d'un rotor d'hélicoptère. En réponse à un dispositif de verrouillage en position de vol des pales, le mécanisme hydraulique provoque des rétractions d'un piston qui opère le repliage des pales.

Le document GB1036028 décrit un mécanisme de repliage de pales d'un rotor d'hélicoptère, où un moteur électrique est monté tangent à une charnière d'articulation de la pale.

Le document GB1059638 décrit un mécanisme de repliage de pales d'un rotor d'hélicoptère. Un moteur est monté sur une charnière qui permet l'articulation d'une pale entre ses positions de vol et repliées.

Le document US-2,880,810 décrit un mécanisme de repliage de pales d'un rotor d'hélicoptères pourvu d'un dispositif permettant de faire tourner le rotor pour le mettre dans une position prédéterminée relativement au fuselage dudit hélicoptère.

Citons également quelques documents, relatifs aux boîtes de transmission principale de puissance, parfois dites « BTP » et disposées dans le cas d'un giravion entre la motorisation et le rotor principal.

Le document FR2402123 décrit des dispositifs permettant de transmettre une puissance entre un arbre moteur et un arbre mené. Un tel dispositif transmetteur de puissance est à engrenages, du type à renvoi d'angle et monté entre les arbres moteur et mené.

Le document FR2670553 décrit un mécanisme de transmission de puissance, conçu pour être placé entre un arbre moteur et deux ensembles à entraîner. Le premier de ces ensembles peut être entraîné ou non, alors que le second ensemble est entraîné en permanence soit par l'arbre moteur, soit par le premier ensemble.

Sur un hélicoptère, ce dispositif transmet de la puissance d'une part au rotor qui doit pouvoir être entraîné en rotation et d'autre part, à des accessoires de servitude de type pompe ou

alternateur. Ces accessoires doivent aussi pouvoir être entraînés alors que le moteur de l'hélicoptère est arrêté.

Par conséquent, on comprend mieux l'objet du repliage automatisé de pales.

Il s'agit d'une opération complexe et exigeante. Notamment, par souci de sécurité, le repliage doit assurer un taux de réussite de l'ordre de 100%.

On comprend aussi que les constituants matériels destinés au repliage, sont soumis à des impératifs et normes contraignants, notamment en termes de poids, d'encombrement, d'environnement, de fiabilité et de longévité.

De nombreuses difficultés s'ajoutent à ceci en pratique, lorsqu'en outre on veut que l'indexation (positionnement en azimut prédéterminé) des pales soit elle aussi automatisée.

En effet, actuellement les rares solutions concrètes d'indexation automatique posent bien souvent des problèmes de fiabilité, d'encombrement et de masse embarquée.

In abstracto, une approche pour obtenir une indexation automatique hautement intégrée et d'une efficacité élevée, serait de passer par la boîte de transmission principale existante.

Pour ce faire, il suffirait en principe d'accoupler un organe moteur de sortie d'un actionneur d'indexation avec un organe à entraîner en entrée de la boîte de transmission principale.

L'organe moteur ainsi lié à la boîte pourrait entraîner le rotor en rotation, jusqu'à ce que les pales aient atteint l'azimut prévu pour leur repliage.

Classiquement, un tel accouplement serait dévolu à une liaison par obstacles du type de celle évoquée plus haut.

Mais en pratique, une telle liaison par obstacles soulève des problèmes lorsque les contraintes à respecter sont très astreignantes (par exemple en termes de poids, d'encombrement, d'environnement, de fiabilité et de longévité).

Tel est le cas pour la mise en coïncidence de parties saillantes et concaves d'un mécanisme d'indexation de pales d'hélicoptère, qui pose des problèmes pratiques irrésolus à ce jour.

D'autre part, du fait de ces mêmes problèmes, l'ajustement de l'azimut manuel ou à partir d'un actionneur externe dit « chignole », a fréquemment été préféré dans la pratique.

L'un de ces problèmes tient à ce que, dans certaines positions du rotor principal, le rapprochement de mise en prise est impossible du fait que les parties saillantes (mâles) et concaves (femelles) des organes moteur et à entraîner respectivement, sont sensiblement face-à-face.

Dans ce cas, d'une part le rapprochement est bloqué car les parties mâles de l'organe moteur et de l'organe à entraîner buttent les unes contre les autres. Ceci peut détériorer la liaison si l'on force alors l'engagement.

D'autre part, si ces parties mâles d'organes moteur et à entraîner sont partiellement face-à-face, mais avec un décalage angulaire suffisant pour qu'un engagement en force se produise, la face d'entrée en contact de ces parties notamment peut être altérée.

Ceci pourrait rendre délicat -voire impossible- une indexation automatique ultérieure de l'azimut des pales.

Face à ce problème, une approche consisterait à chanfreiner la face d'entrée (i.e. : l'embout) en contact des parties saillantes et concaves des organes moteur et à entraîner.

Néanmoins, on constate en pratique des situations où la mise en prise reste impossible, du fait que des parties planes (sensiblement perpendiculaires à l'axe de rotation) entre chanfreins des organes moteur et à entraîner, sont en contact du côté sortie (e.g. : actionneur) et du côté entrée (e.g. : BTP).

Une autre approche serait, face à ce problème, de relâcher momentanément le frein de rotor, afin de pouvoir opérer une légère rotation des engrenages de la boîte de transmission et atteindre une position angulaire relative où l'engagement serait possible entre les parties concaves et en saillie des organes moteur et à entraîner.

Cependant, ceci obligerait non seulement soit à une intervention manuelle, soit à une réactivation (e.g. de la boîte de transmission, branchement d'une « chignole ») opposée à l'objectif d'indexation automatisée et rapide de l'azimut des pales.

Mais surtout en cas de repliage par grand vent par exemple, un relâchement du rotor pourrait causer des dégâts considérables sur l'appareil, son environnement et les personnels à proximité.

On peut également s'interroger sur l'efficacité atteignable en cas de réactivation notamment, par cette légère rotation. En effet, elle permet de s'extraire d'une situation de blocage, mais ne garantit en rien que la nouvelle position des organes moteur et à entraîner autorisera mieux l'accouplement.

Pour éviter que les parties mâles des organes à accoupler restent face-à-face lors de l'engagement, dans le même ordre d'idées, il serait envisageable de faire alors lentement tourner l'organe moteur de l'actionneur motorisé.

Mais ceci n'est pas possible dans bien des cas. Par exemple, si l'actionneur était entraîné par un moteur électrique asynchrone, son démarrage serait trop brutal dans ce contexte.

Ici encore, les faces d'entrée en contact des parties mâles pourraient se retrouver altérées, par exemple par matage sous l'effet de la rotation combinée aux forces axiales d'engagement.

De nouveau, soulignons à ce stade que si l'invention est discutée avec une liaison par obstacles (e.g : à cannelures complémentaires), qui sont accouplés par coulissement axial, elle couvre également d'autres formes de liaisons par obstacles et de modes de rapprochement.

L'invention vise à résoudre ces problèmes notamment. Elle propose entre autres une solution de mise en coïncidence avant accouplement, qui puisse être notamment :

- entièrement automatisée ;

- simple et sûre dans sa mise en oeuvre ;

- apte à assurer un taux de réussite de l'ordre de 100% ;

- matériellement légère, compacte, fiable et pérenne ;

- sans risque ou impact inacceptable sur son environnement ;

- en adéquation avec des impératifs et normes applicables ;et

- hautement intégrée.

À cet effet, un objet de l'invention vise un procédé de mise en coïncidence avant accouplement de parties saillantes avec des parties concaves complémentaires, et inversement, d'un organe amont et d'un organe aval, au sein d'une liaison non permanente par obstacle prévue pour la transmission d'un mouvement de rotation entre ces organes amont et aval.

Ce procédé prévoit :

- une étape de tentative d'accouplement, avec une phase de rapprochement des parties complémentaires, et une phase d'échec de la tentative si des parties saillantes de l'organe amont sont sensiblement en regard de parties saillantes de l'organe aval ;

- une étape de mise en coïncidence angulaire, en cas de phase d'échec, par au moins une opération de rotation relative des parties en regard de l'organe amont et de l'organe aval ; et

- une étape d'engagement effectif de la liaison de transmission de mouvement, lorsque les parties complémentaires de l'organe amont sont sensiblement en coïncidence avec celles de l'organe aval.

Selon l'invention, ce procédé prévoit qu'au moins l'étape de mise en coïncidence est automatisée, et comporte :

- une phase de tension mécanique, en cas de phase d'échec, qui opère une tension de l'organe amont sensiblement suivant la direction de la phase de rapprochement, mais suivant un sens inverse ;

- une phase d'appairage en rotation de l'organe amont, avec au moins un élément mécanique de guidage angulaire, sous l'effet de la phase de tension ; et

- une phase de déphasage de l'organe amont par rapport à l'organe aval, sous l'effet de la phase de tension, provoquée par une opération de guidage angulaire de l'élément mécanique appairé à l'organe amont, contre un référentiel statique en rotation relativement à l'organe aval.

Selon une mise en oeuvre, ce procédé prévoit que la phase de rapprochement et/ou la phase de tension mécanique est obtenue au moins en partie par coulissement axial et/ou coulissement radial et/ou renversement autour d'un axe de pivotement.

Par exemple, cette étape de rapprochement est entièrement réalisée par coulissement axial, de sorte que la phase d'écrasement à effort restreint est opérée axialement en sens inverse à celui du rapprochement.

Selon une mise en oeuvre, la phase d'échec de l'étape de tentative d'accouplement est issue soit d'une opération de limitation de l'effort généré par la phase de rapprochement sur l'organe amont au-delà d'une valeur prédéterminée d'effort de seuil, soit d'une période prédéterminée de temporisation, cette phase d'échec provoquant un renversement du sens d'activation d'une motorisation de rapprochement.

Par exemple la période prédéterminée de temporisation présente une durée de l'ordre de 0,5 à 5 secondes, à compter du début de l'étape de rapprochement.

Selon une mise en oeuvre, la phase de tension mécanique est opérée par renversement du sens d'activation d'une motorisation commune à la phase de rapprochement des parties complémentaires de l'étape de tentative d'accouplement.

Par exemple, la phase de rapprochement est axiale et obtenue par une opération de transformation mécanique d'un mouvement de pivotement issu de la motorisation commune de rapprochement, cette opération de transformation mécanique étant compatible, éventuellement simultanément, avec le mouvement de rotation à transmettre par l'accouplement de l'organe amont vers l'organe aval.

Selon une mise en oeuvre, la phase de tension mécanique est opérée à l'encontre d'une force mécanique de congé qui est destinée à être emmagasinée lors de l'étape de mise en coïncidence, puis libérée lors d'une étape de réarmement.

Par exemple, la phase de tension mécanique est axiale et/ou la force mécanique de congé est emmagasinée par une opération de déformation élastique telle que bandage d'un ressort ou analogue.

Selon une mise en oeuvre, la phase d'appairage de l'étape de mise en coïncidence est au moins en partie obtenue par une opération de plaquage local de l'organe amont contre l'élément mécanique de guidage, cette opération de plaquage local provoquant un frottement mutuel de l'organe amont contre l'élément mécanique à même d'immobiliser temporairement l'un par rapport à l'autre sous l'effet de la phase de tension mécanique et éventuellement d'une force mécanique de congé.

Selon une mise en oeuvre, l'opération de guidage angulaire de la phase de déphasage est au moins en partie obtenue par un glissement local relatif de l'élément mécanique contre le référentiel statique.

Selon une mise en oeuvre, l'opération de guidage angulaire de la phase de déphasage est provoquée sur une amplitude de guidage de l'ordre de Â degrés, tel que :

$$[\hat{A} \neq 360 / N \times E \times R], \text{ et } [(90 / N) < R < (360 / N)]$$

où:

N : est le nombre de parties saillantes ou concaves à engager;

E : est un entier non nul, par exemple égal à 1 ; et

R : est un facteur prédéterminé de guidage angulaire.

Par exemple, l'amplitude de guidage Â est de l'ordre de la valeur angulaire en degrés correspondant à celle qui est couverte par sensiblement un quart à une demie partie saillante ou concave à engager.

Selon une mise en oeuvre, ce procédé prévoit une étape de réarmement automatisée, avec :

- une phase de verrouillage mutuel en rotation de l'élément mécanique de guidage angulaire avec le référentiel statique, au moins en partie ultérieurement à la phase de déphasage et notamment à l'opération de guidage angulaire, cette phase de verrouillage étant provoquée mécaniquement par la phase de tension mécanique, par exemple par interposition radiale dans le sens centrifuge de verrous alors poussés par l'organe amont, entre l'élément mécanique et le référentiel statique ;

- puis une opération de fin de course de la phase de tension mécanique, au moins en partie ultérieure à l'opération de guidage angulaire, l'opération de fin de course de tension provoquant une nouvelle phase de rapprochement ; et

- lors de cette nouvelle phase de rapprochement, des opérations distinctes de cessation d'appairage de l'organe amont avec l'élément de guidage et de cessation de verrouillage de l'élément de guidage avec le référentiel statique.

Selon une mise en oeuvre, l'opération de fin de course de tension provoque la nouvelle phase de rapprochement suite à une opération de détection d'une position maximale de tension.

Par exemple, cette nouvelle phase de rapprochement est axiale et obtenue par une opération de transformation d'un mouvement de pivotement issu de la motorisation commune de rapprochement, via une chaîne mécanique réversible à obstacles complémentaires, cette chaîne mécanique de transformation étant compatible, éventuellement simultanément, avec le mouvement de rotation à transmettre par l'accouplement de l'organe amont à l'organe aval.

Selon une mise en oeuvre, l'opération de cessation de verrouillage provoque d'abord une libération d'une force mécanique de congé, et sous l'effet de la force mécanique de congé, un retour en position étendue de butée de l'élément de guidage contre le référentiel statique.

Selon une mise en oeuvre, ce procédé prévoit qu'au moins l'étape de mise en coïncidence est répétée jusqu'à correspondance des parties saillantes et concaves complémentaires, suite à quoi l'étape effective d'accouplement est autorisée.

Selon une mise en oeuvre, ce procédé prévoit que l'organe amont est un organe moteur, tandis que l'organe aval est un organe à entraîner.

Selon une mise en oeuvre, une fois autorisée l'étape effective d'accouplement, est débutée via la liaison non permanente accouplée par obstacles, la transmission d'un mouvement de rotation entre l'organe amont et l'organe aval.

Par exemple, cette transmission de mouvement de rotation est opérée sous l'effet d'une motorisation principale distincte d'une motorisation de rapprochement, par l'intermédiaire d'une phase de découplage de réduction qui agit en sortie par une opération d'emboîtement de solidarisation en rotation avec l'organe amont et/ou suite à un desserrage d'un frein de blocage de l'organe aval.

Un autre objet de l'invention vise un système de mise en coïncidence avant accouplement de parties saillantes avec des parties concaves complémentaires, et inversement, d'un organe amont et d'un organe aval, au sein d'une liaison non permanente par obstacle prévue pour la transmission d'un mouvement de rotation entre ces organes amont et aval.

Ce système comporte :

- un ensemble de tentative d'accouplement, avec un moyen de rapprochement des parties complémentaires, et un moyen révélateur d'échec de la tentative si des parties saillantes de l'organe amont sont sensiblement en regard de parties saillantes de l'organe aval ;

- un ensemble de mise en coïncidence angulaire, relié au moyen révélateur d'échec afin de pouvoir provoquer l'activation d'au moins un organe de rotation relative des parties en regard de l'organe amont et de l'organe aval ; et

- un ensemble d'engagement effectif de la liaison de transmission de mouvement, agencé pour assurer l'accouplement des parties complémentaires de l'organe amont sensiblement en coïncidence avec celles de l'organe aval, et inversement.

Selon l'invention, l'ensemble de mise en coïncidence est automatique, et comprend :

- un moyen de tension mécanique, agencé pour opérer en cas d'activation du moyen révélateur d'échec, une tension de l'organe amont sensiblement suivant la direction de sollicitation par le moyen de rapprochement, mais suivant un sens inverse ;

- un moyen d'appairage en rotation de l'organe amont, avec au moins un élément mécanique de guidage angulaire, agencé pour coopérer avec le moyen de tension afin d'obtenir l'appairage ; et

- un moyen de déphasage de l'organe amont par rapport à l'organe aval, sous l'effet du moyen de tension, avec un organe de guidage angulaire de l'élément mécanique, cet organe de guidage étant apte à glisser contre un référentiel statique en rotation relativement à l'organe aval, pour provoquer le déphasage.

Selon une réalisation, ce système est apte à mettre en oeuvre le procédé de mise en coïncidence évoqué plus haut.

Selon une réalisation, ce système prévoit que le moyen de rapprochement de l'ensemble de tentative d'accouplement est agencé pour assurer un déplacement de l'organe amont relativement à l'organe aval, au moins en partie par coulissement axial et/ou coulissement radial et/ou renversement autour d'un axe de pivotement.

Dans un exemple, ce moyen de rapprochement assure un déplacement relatif des organes amont et aval, entièrement par coulissement axial de l'organe amont à l'intérieur d'un carter dont est rigidement solidaire le référentiel statique, le moyen d'écrasement à effort restreint étant agencé pour provoquer un coulissement axial de l'organe amont, mais en sens inverse à celui du coulissement axial de rapprochement.

Dans un exemple, ce moyen de rapprochement comporte au moins :

- une motorisation de rapprochement, commune aux ensembles de mise en coïncidence et d'engagement effectif ; et

- un organe de transformation mécanique d'un mouvement de pivotement issu de la motorisation commune de coulissement axial de l'organe amont, cet organe de transformation mécanique étant agencé pour permettre également, éventuellement en simultané, le mouvement de rotation de l'organe amont vers l'organe aval.

Dans un mode d'exécution, cet organe de transformation mécanique comporte au moins :

- un arbre primaire relié fonctionnellement en entrée à la motorisation de rapprochement et avec une vis sans fin de sortie ;

- un assemblage intermédiaire de renvoi d'angle et/ou démultiplication, par exemple avec d'une part un axe intermédiaire avec une couronne dentée motrice en prise avec la vis sans fin de sortie de l'arbre primaire, ainsi qu'une vis sans fin intermédiaire en sortie et d'autre part un arbre de sortie de guidage en rotation d'un secteur à dents intermédiaire, qui collabore en entrée avec la vis sans fin intermédiaire, l'arbre de sortie guidant en rotation un secteur à dents décalé ; et

- une barre de transmission de l'organe amont, pourvue d'épaulements périphériques espacés axialement et disposés pour pouvoir venir engrener avec le secteur à dents décalé de l'assemblage intermédiaire, de sorte qu'une rotation au sein de cet assemblage intermédiaire provoque le coulissement axial de l'organe amont, par poussée sur des épaulements périphériques.

Selon une réalisation, le moyen révélateur d'échec est piloté par un organe de limitation de l'effort généré par le moyen de rapprochement sur l'organe amont au-delà d'une valeur prédéterminée d'effort de seuil, de façon à provoquer un renversement du sens d'activation de la motorisation de rapprochement.

Selon un autre mode de réalisation, le moyen révélateur d'échec est piloté par une temporisation entre le début d'activation du moyen de rapprochement et la détection effective d'engagement de la liaison de transmission du mouvement.

Par exemple, l'organe de limitation de l'effort comporte une temporisation et/ou est fonctionnellement relié à un organe de détection d'une valeur d'effort supérieure à la valeur prédéterminée d'effort de seuil, cet organe de détection, tel qu'un capteur intégré à une motorisation de rapprochement, étant agencé pour initialiser la limitation.

Selon une réalisation, le moyen d'appairage de l'ensemble de mise en coïncidence comporte au moins un organe de plaquage local de l'organe amont contre l'élément mécanique de guidage.

Par exemple, un flasque tronconique à gorges de mordant et en saillie radiale d'une barre de transmission de l'organe amont, est agencé pour être apte à un plaquage axial contre une cavité tronconique de l'élément mécanique de guidage, cette cavité tronconique étant de forme sensiblement complémentaire à celle du flasque tronconique, définissant une butée avant prévue pour être sollicitée par le moyen de tension mécanique, et éventuellement revêtue de matière tendre ou ductile telle que de l'aluminium.

Selon une réalisation, la cavité tronconique est agencée pour agir à l'encontre de l'action d'un organe producteur de force mécanique de congé à libérer lors d'une étape de réarmement.

Par exemple, l'organe producteur de force mécanique produit une déformation élastique par bandage, et est en forme de ressort ou analogue. Typiquement, l'organe producteur de force mécanique est monté axialement entre une butée arrière de l'élément mécanique de guidage et une butée avant du référentiel statique telle qu'un plateau à aiguilles de découplage.

Selon une réalisation, l'élément de guidage angulaire du moyen de déphasage comporte au moins un organe formant glissière locale, agencé pour coopérer avec au moins un organe formant palpeur de guidage du référentiel statique.

Par exemple, l'organe formant glissière de l'élément de guidage angulaire comporte au moins une paire de lumières oblongues inclinées et en regard l'une de l'autre diagonalement, tandis que l'organe formant palpeur du référentiel statique possède au moins un doigt traversant et disposé en saillie radialement à l'intérieur de chaque lumière de la paire de lumières.

Dans un mode de réalisation où l'organe amont possède trente deux parties en saillie telles que cannelures ou analogues, chaque lumière oblongue de l'élément de guidage angulaire est inclinée d'une amplitude de guidage de l'ordre de Â degrés comprise entre 0,5˚ et 10˚, notamment entre 0,5˚ et 5˚, par exemple sensiblement de 1,5˚ à 2,5˚.

Selon une réalisation, l'organe de guidage angulaire du moyen de déphasage est disposé pour pouvoir provoquer un déphasage sur une amplitude de guidage de l'ordre de Â degrés, tel que :

$$[Â \neq 360 / N \times E \times R], \text{ et } [(90 / N) < R < (360 / N)]$$

où :

N : est le nombre de parties saillantes ou concaves à engager;

E : est un entier non nul, par exemple égal à 1 ; et

R : est un facteur prédéterminé de guidage angulaire.

Par exemple, l'amplitude de guidage Â est de l'ordre de la valeur angulaire en degrés correspondant à celle qui est couverte par sensiblement un quart à une demie partie saillante ou concave à engager.

Selon une réalisation, ce système comporte un ensemble de réarmement automatisé, avec au moins :

- un moyen de verrouillage mutuel en rotation de l'élément mécanique de guidage angulaire avec le référentiel statique ;

- un organe détecteur de fin de course commun au moyen de tension mécanique, agencé pour provoquer l'activation du moyen de rapprochement ;

- des moyens de cessation d'appairage de l'organe amont avec l'élément de guidage ; et

- des moyens de cessation de verrouillage de l'élément de guidage avec le référentiel statique.

Dans un mode de réalisation, le moyen de verrouillage mutuel de l'ensemble de réarmement automatisé est fonctionnellement relié au moyen de tension mécanique pour provoquer mécaniquement le verrouillage par interposition radiale dans le sens centrifuge de galets effaçables formant verrou.

Par exemple, le moyen de verrouillage mutuel comporte au moins trois galets effaçables montés mobiles à intervalles angulaires régulièrement répartis en circonférence d'un évidement périphérique de l'élément mécanique de guidage, ainsi que pour chaque galet effaçable, un poussoir radial, notamment en forme de bille.

Chaque poussoir radial est monté coulissant dans un perçage radial de l'élément mécanique et est apte à être repoussé radialement vers l'extérieur par un goulet d'embout arrière de l'organe amont afin de le déplacer radialement vers l'extérieur, le galet effaçable correspondant étant ainsi rendu mobile entre :

- une position de verrouillage où il est à la fois dans l'évidement périphérique de l'élément mécanique et en prise avec le référentiel statique ; et

- une position de libre pivotement relatif de l'élément mécanique et du référentiel statique, où il est hors de l'évidement périphérique et plaqué contre une paroi intérieure du référentiel statique par son poussoir radial correspondant.

Selon une réalisation, ce système prévoit que l'organe amont est un organe moteur, tandis que l'organe aval est un organe à entraîner, cet organe amont comportant à une extrémité libre de couplage, des parties saillantes et concaves en forme de cannelures à embouts avant biseautés.

Par exemple, l'organe aval définit une barre de transmission constamment sollicitée à proximité de son extrémité libre de couplage, par un moyen de rattrapage de jeu axial de l'avant vers l'arrière.

Selon une réalisation, le système comporte une motorisation principale apte à entraîner l'organe aval en rotation, via un moyen de découplage de réduction, tel qu'un train épicycloïdal, ce moyen de découplage étant fonctionnellement relié en entrée à une sortie d'un moteur électrique asynchrone.

Un objet supplémentaire de l'invention vise une méthode d'entraînement en rotation à l'aide d'un organe amont couplé à un organe aval, du type apte à mettre en oeuvre le procédé et/ou employant le système de mise en coïncidence évoqués.

Selon l'invention, cette méthode permet d'assurer une indexation automatique en azimut des pales d'un rotor d'un aéronef à voilure tournante, où :

- un frein apte à immobiliser le rotor est serré lors de l'étape de mise en coïncidence, voire lors des étapes de tentative d'accouplement et d'engagement effectif ; et

- ce frein d'immobilisation du rotor est desserré suite à l'étape d'engagement effectif, lors de la transmission de mouvement de rotation depuis l'organe amont vers l'organe aval, lesdits organes étant fonctionnellement solidaires d'une boite de transmission principale de l'aéronef.

Une mise en oeuvre est telle que cette méthode prévoit successivement :

- un état de demande de desserrage du frein rotor, suivi de sa validation, le tout préalablement à la transmission du mouvement de rotation depuis l'organe amont vers l'organe aval ;

- l'étape de transmission du mouvement de rotation depuis l'organe amont vers l'organe aval jusqu'à mise à un azimut prédéterminé des pales par rotation du rotor ; et

- un état de demande de serrage du frein rotor, suivi de sa validation.

Une mise en oeuvre est telle que ces états de demandes de serrage/desserrage du frein rotor, ainsi que leurs validations, sont au moins en partie effectuées manuellement, en fonction d'informations notamment visuelles fournies par un panneau de commande et acquittables via un contrôleur dédié tout comme le panneau.

Une mise en oeuvre est telle que ces états de demandes de serrage/desserrage du frein rotor, ainsi que leurs validations, sont au moins en partie effectuées automatiquement, par exemple avec un dédoublage des informations de demandes et validations, pour éviter tout risque de freinage du rotor en vol de l'aéronef.

L'invention vise encore en tant qu'objet, un dispositif d'entraînement en rotation à l'aide d'un organe amont couplé à un organe aval, employant le système de mise en coïncidence.

Selon l'invention, ce dispositif est agencé pour assurer une indexation automatique en azimut des pales d'un rotor d'un aéronef à voilure tournante, ce dispositif étant automatique et comportant notamment :

- un frein apte à immobiliser le rotor, par exemple de type électrique ;

- un panneau d'affichage d'états de commandes, d'informations et de validations de l'indexation automatique ;

- un contrôleur dédié d'états d'indexation automatique ; et

- un réseau de dédoublage des informations de demandes et validations d'étapes d'états de commandes, d'informations et de validations de l'indexation automatique.

Encore un autre objet de l'invention vise un aéronef à voilure tournante tel qu'un hélicoptère, employant le système de mise en coïncidence et/ou employant le dispositif d'entraînement évoqués.

Selon l'invention, cet aéronef comporte une boîte de transmission principale avec une prise de couplage d'un système de mise en coïncidence automatisé, un frein apte à immobiliser un rotor et les pales principales associées, par exemple de type électrique, et à l'intérieur d'un poste de pilotage, des moyens de commande manuelle et/ou automatique d'états de repliage de pales.

L'invention est maintenant décrite en référence des exemples de réalisation, donnés à titre non limitatif et illustrés par les dessins annexés dans lesquels :

- la figure 1 est une vue schématique écorchée en perspective axiale de dessus d'un aéronef à voilure tournante conforme à l'invention, en fait un hélicoptère, qui est ici représenté de côté avec son extrémité avant dite « nez » vers la gauche et son extrémité arrière dite « queue » vers la droite ;

- la figure 2 est une vue schématique simplifiée en perspective axiale de dessus, qui illustre en détail un dispositif d'entraînement en rotation et un système de mise en coïncidence conformes à l'invention ;

- la figure 3 est une vue schématique partielle en perspective axiale de côté, d'un embout femelle d'organe aval de couplage à un dispositif d'entraînement en rotation conforme à l'invention, qui est pourvu de cannelures biseautées ;

- la figure 4 est une vue partielle d'élévation transversale de l'arrière axialement, de l'embout de la figure 3 à cannelures biseautées, où sont schématisés des exemples de valeurs maximales et minimales d'amplitude de guidage de déphasage selon l'invention ;

- la figure 5 est une vue partielle localement en coupe axiale d'élévation d'un dispositif d'entraînement en rotation et d'un système de mise en coïncidence conformes à l'invention, où l'on voit notamment une motorisation principale, un moyen de découplage épicycloïdal, un organe détecteur de fin de course et un moyen de rattrapage de jeu axial ;

- les figures 6 à 15 sont des vues en coupe axiale transversale pour les figures paires (6-8-10-12-14) et d'élévation pour les figures impaires (7-9-11-13-15), d'un système de mise en coïncidence conforme à l'invention, dans des états ou positions respectives :

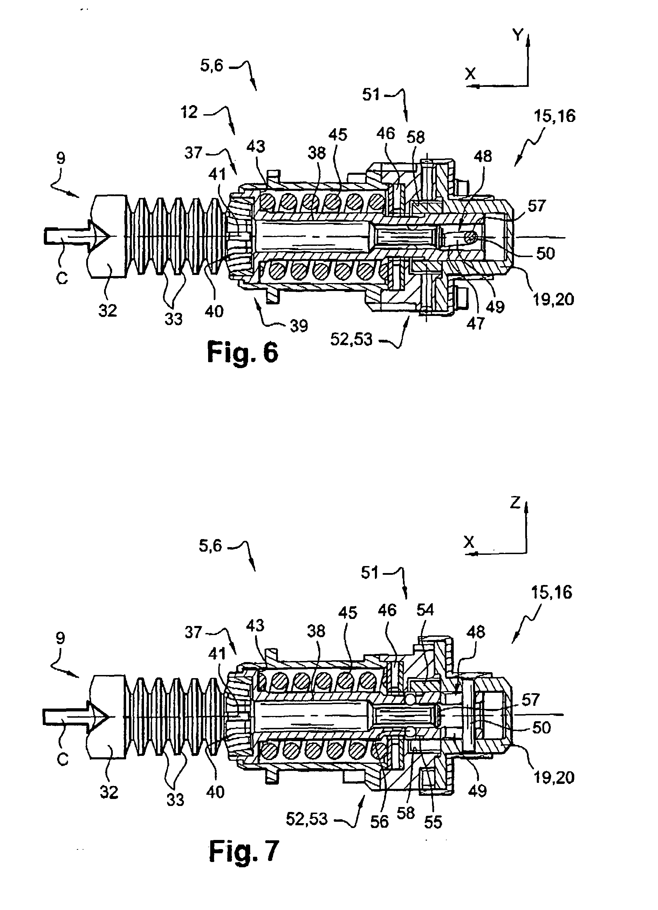

- sur les figures 6 et 7 en cours de rentrée axiale d'avant en arrière, d'une barre de transmission d'organe amont avant déphasage ;

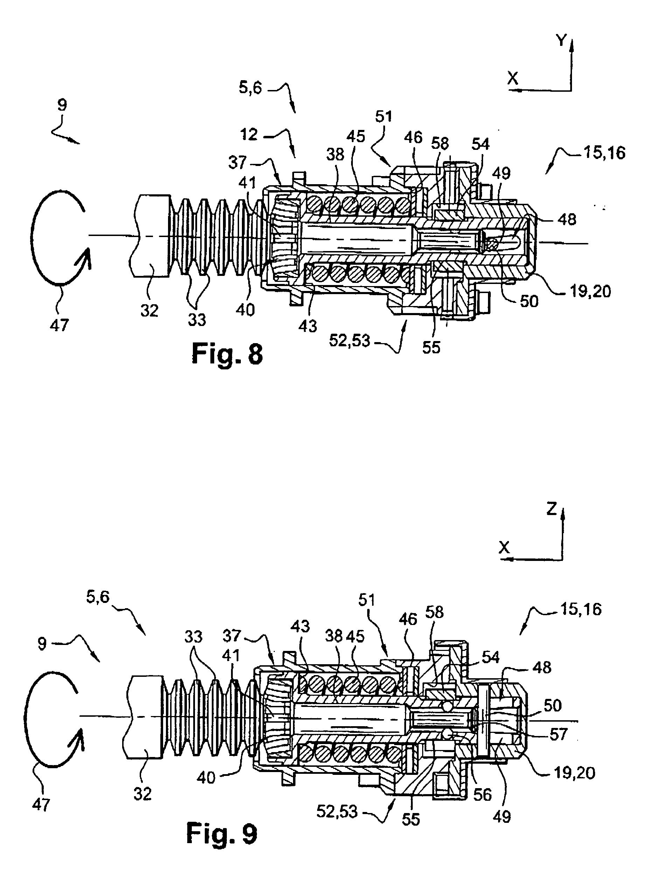

- sur les figures 8 et 9 en cours de rentrée axiale et à guidage angulaire de déphasage d'une barre de transmission, lors d'un verrouillage suite à appairage ;

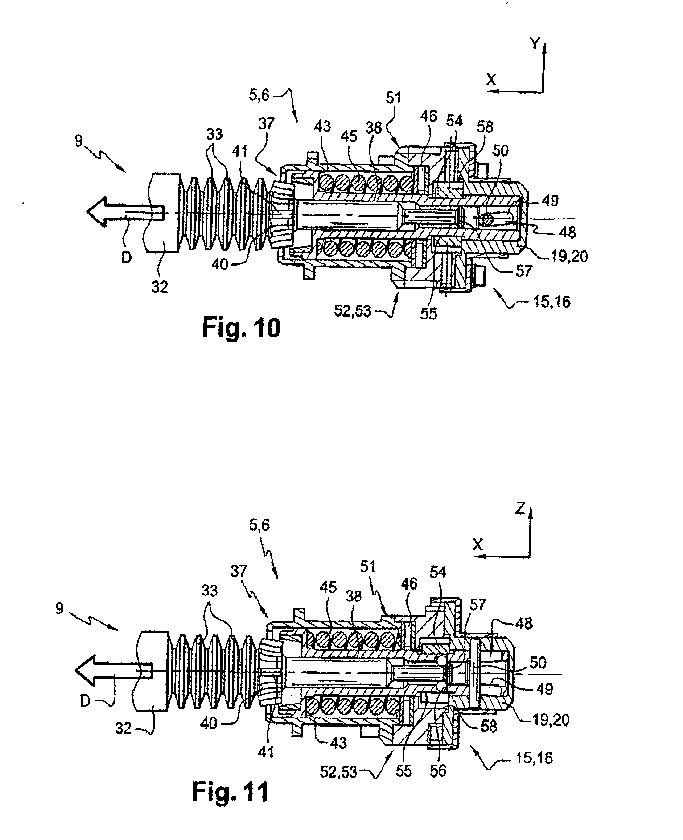

- sur les figures 10 et 11 en cours de rapprochement axial d'une barre de transmission, suite à cessation d'appairage et avant déverrouillage ;

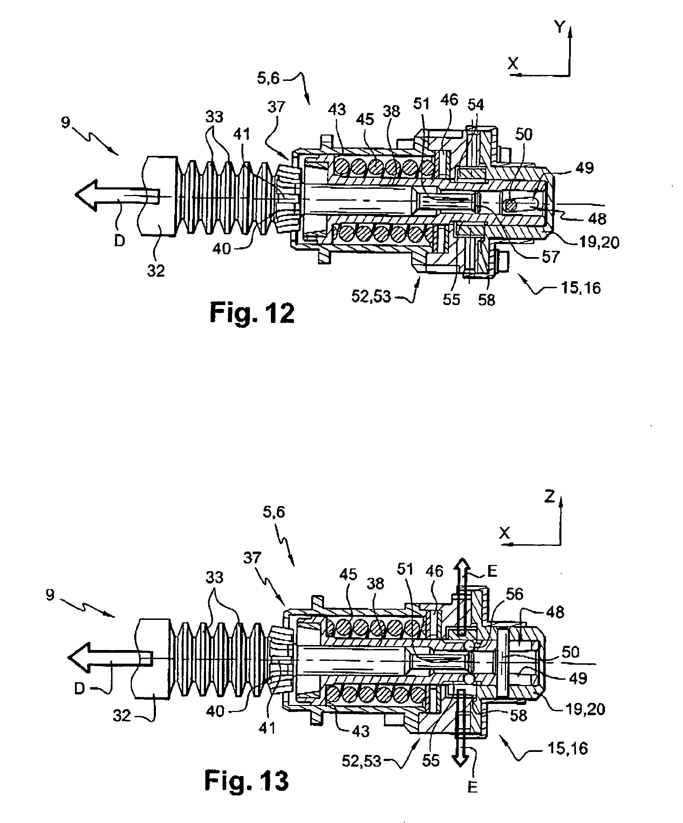

- sur les figures 12 et 13 en cours de déverrouillage de réarmement ; et

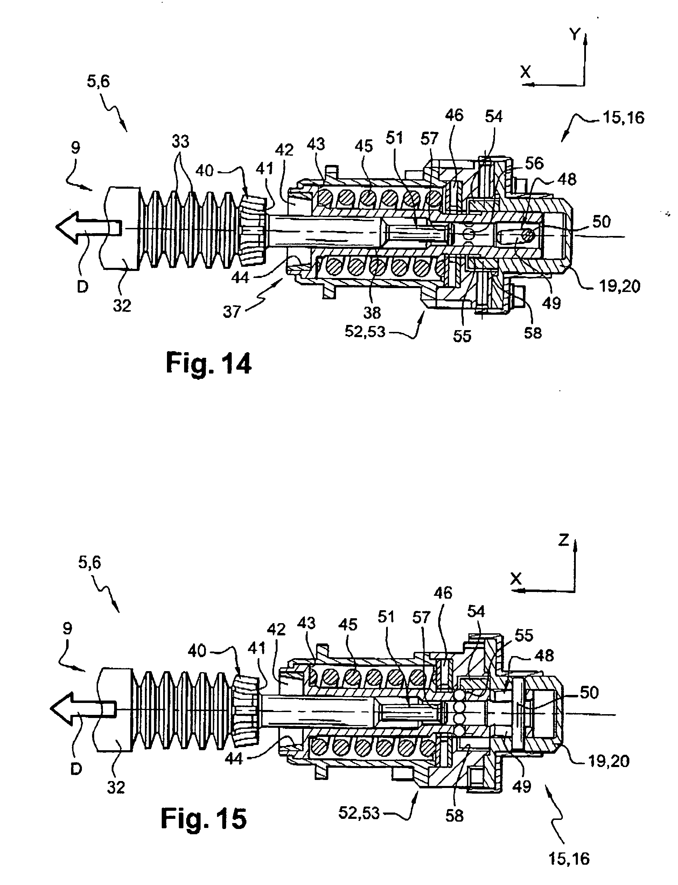

- sur les figures 14 et 15 en fin de course de rapprochement axial, après congé de réarmement, un élément de guidage étant plaqué contre une butée avant d'un référentiel statique.

Sur les dessins, où les éléments similaires sont désignés par les mêmes numéros de référence, sont représentées trois directions orthogonales les unes aux autres.

Une direction Z dite d'élévation, correspond aux hauteur et épaisseur des structures décrites : les termes haut/bas ou inférieur/supérieur s'y réfèrent. Par simplification, cette direction d'élévation Z est parfois dite verticale.

Une autre direction X dite axiale, correspond aux longueur ou dimension principales des structures décrites. Les termes avant/arrière s'y réfèrent (terme « avant » relatif à X positif). Par simplification, cette direction axiale X est parfois dite horizontale.

Encore une autre direction Y dite transversale, correspond aux largeur ou dimension latérale des structures décrites. Le terme côté s'y réfère. Par simplification, cette direction transversale Y est parfois aussi considérée comme étant horizontale.

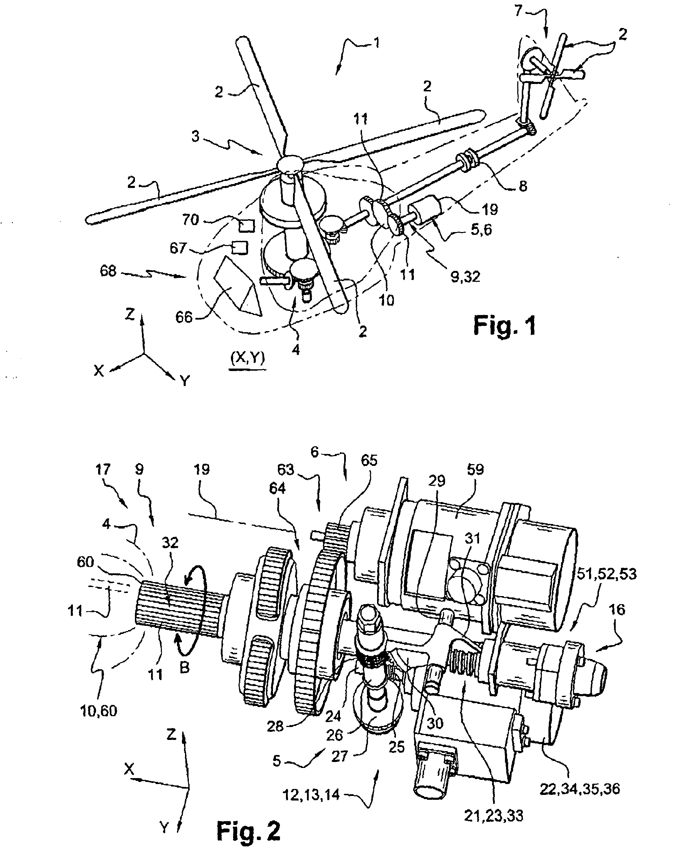

Sur la figure 1, la référence 1 désigne de façon générale, un aéronef à voilure tournante. Dans ce cas d'espèce, l'aéronef 1 est un hélicoptère. Plus loin, cet aéronef 1 est parfois appelé « appareil ».

Les directions X et Y définissent conjointement un plan (X,Y) dit principal à l'intérieur duquel s'inscrit typiquement le polygone de sustentation et un plan d'atterrissage de l'appareil 1.

Comme on l'a vu, le repliage des pales 2 d'un rotor 3 principal de sustentation et de propulsion de l'hélicoptère 1, pose un problème de mise en coïncidence entre une boîte 4 de transmission principale (BTP) et un système 5 de mise en coïncidence qui fait partie d'un dispositif 6 d'entraînement du rotor 3, dédié à cette fin.

En outre, l'appareil 1 de la figure 1 possède un rotor 7 anti-couple, lui aussi relié à la boîte 4 et pourvu de pales 2. Tout comme le rotor 3 principal, ce rotor 7 est entraîné en fonctionnement normal par un groupe propulseur (non illustré) par exemple avec une ou plusieurs turbines.

Le dispositif est bien sûr distinct de ce groupe propulseur, mais est à l'instar de ce dernier relié fonctionnellement à la boîte 4 (BTP).

C'est dans ce contexte que pour le repliage des pales 2, le rotor 3 doit d'abord être disposé avec ses pales 2 agencées suivant un azimut prédéterminé, et un frein 8 d'immobilisation de ce rotor 3 est engagé.

Cependant, pour atteindre l'azimut de repliage des pales 2, on doit assurer un accouplement entre la boite 4 (BTP) et le dispositif 6, qui nécessite la mise en coïncidence mutuelle d'au moins :

- un organe amont 9 du dispositif 6 d'entraînement (et donc du système 5) ; avec

- un organe aval 10 de cette boîte 4.

Sur l'appareil 1, cet accouplement est non permanent (impermanent), et forme une liaison par obstacle prévue pour la transmission d'un mouvement de rotation schématisé en B sur la figure 2, entre ces organes amont 9 et aval 10.

De fait, les obstacles assurant la transmission du mouvement de rotation B via cet accouplement sont en forme de parties 11 saillantes et concaves complémentaires, et inversement, de l'organe 9 amont et de l'organe 10 aval.

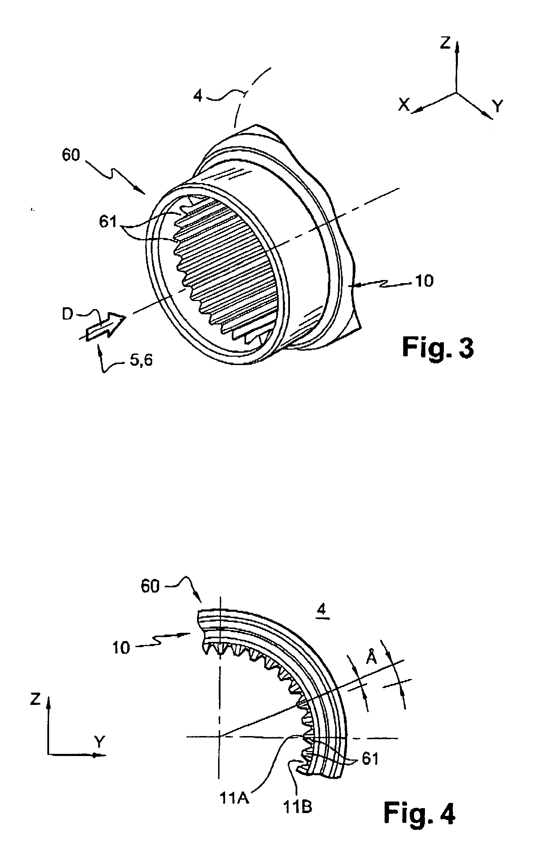

Comme cela ressort de la figure 4, dans des réalisations, ces parties 11 complémentaires sont en forme de cannelures, avec des parties saillantes 11A et concaves 11B.

On comprend que survient un problème quand, dans certaines positions du rotor 3, un rapprochement de mise en prise est impossible du fait que les parties saillantes 11A (mâles) et concaves 11 B (femelle) de l'organe 9 ici moteur et de l'organe 10 ici à entraîner respectivement, sont sensiblement face-à-face.

Ce rapprochement est alors bloqué si les parties 11A de l'organe 9 et de l'organe 10 buttent les unes contre les autres, ce qui le rend usuellement délicat et fastidieux, par exemple si on doit recourir à une indexation manuelle de l'azimut des pales 2.

S'il s'agit de faire que l'indexation de l'azimut des pales 2 soit automatisée, ce cas de rapprochement bloqué la rend impossible.

Face à une telle situation, il est d'usage de prévoir :

- une étape (12) de tentative d'accouplement, avec une phase (13) de rapprochement des parties 11 complémentaires, et une phase (14) d'échec de la tentative si des parties 11A saillantes de l'organe 9 sont sensiblement en regard de parties saillantes 11A de l'autre organe 10 à accoupler ;

- une étape (15) de mise en coïncidence angulaire, en cas de phase (14) d'échec, par au moins une opération (16) de rotation relative des parties 11A en regard ; et

- une étape (17) d'engagement effectif de la liaison de transmission de mouvement, lorsque les parties 11 complémentaires de l'organe 9 sont sensiblement en coïncidence avec celles de l'autre organe 10.

C'est instinctivement ce que chacun fait, lorsqu'il emploie un tournevis cruciforme pour serrer ou desserrer une vis correspondante.

Ce problème étant maintenant posé, des réalisations matérielles de l'invention peuvent être décrites au vu des figures.

Ainsi, le système 5 de mise en coïncidence, comporte notamment (figure 2) un ensemble 12 de tentative d'accouplement, (relatif à une étape 12 de tentative d'accouplement) avec un moyen 13 de rapprochement des parties 11 complémentaires, et un moyen 14 révélateur d'échec de la tentative ou une temporisation, qui indique que des parties 11A saillantes de l'organe 9 sont sensiblement en regard de parties 11A saillantes de l'organe 10, c'est-à-dire que l'engagement à échoué.

Ce moyen 13 exerce un déplacement de rapprochement D de l'organe 9, orienté axialement de droite à gauche, sur les figures 10 à 15.

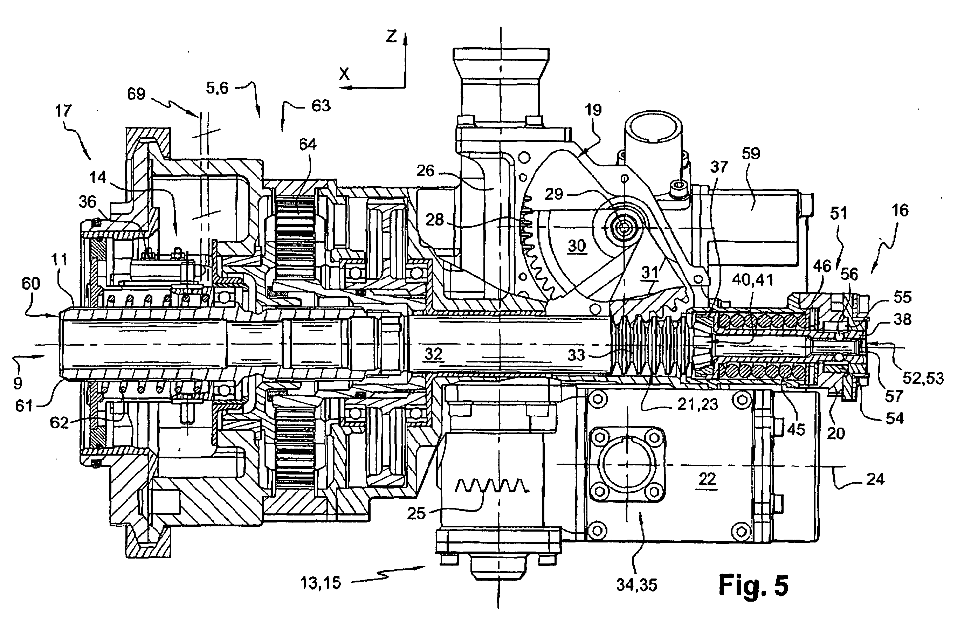

Sur les figures 5 à 15, on désigne en 15 un ensemble de mise en coïncidence angulaire, qui fait partie du système 5.

Cet ensemble 15 est relié au moyen 14 révélateur d'échec de manière à pouvoir provoquer l'activation d'un organe 16 de rotation relative des parties 11 en regard.

Par ailleurs, un ensemble 17 d'engagement effectif de la liaison est agencé pour assurer l'accouplement des parties 11 complémentaires de l'organe 9 sensiblement en coïncidence avec celles 11 de l'organe 10.

Par souci de simplicité, on comprend que les mêmes références numériques désignent lorsqu'ils sont éponymes, les :

- étapes de procédé et ensembles fonctionnels du système ;

- phases de procédé et moyens fonctionnels du système ; et

- opérations du procédé et organes fonctionnels du système.

Selon l'invention, l'ensemble 15 de mise en coïncidence est automatique.

Cet ensemble 15 comprend d'abord un moyen 21 de tension mécanique, agencé pour opérer en cas d'activation du moyen 14 d'échec, une tension C (Figures 6 et 7) de l'organe 9 sensiblement suivant une direction (ici axiale X) de sollicitation de cet organe 9 par le moyen 13 de rapprochement, mais suivant un sens inverse (de gauche à droite sur les figures 6 et 7).

Dans des réalisations non illustrées, les moyens 13 assurant le rapprochement D et/ou les moyens 21 assurant la tension C sont agencés pour assurer un déplacement de l'organe 9 relativement à l'organe 10 qui sont au moins en partie de :

- coulissement radial à la périphérie des parties 11 ; et/ou

- renversement autour d'un axe de pivotement.

Mais sur les figures évoquées, le moyen 13 de rapprochement assure un déplacement D entièrement par coulissement axial (X).

Ce coulissement de rapprochement D de l'organe 9 est guidé à l'intérieur d'un carter 19 du dispositif 6, dont est rigidement solidaire un référentiel statique 20.

Dans le même ordre d'idées, notons qu'un moyen 21 d'écrasement à effort restreint est agencé pour provoquer un coulissement axial de l'organe 9, mais en sens inverse à celui du coulissement axial (X) de rapprochement D.

Par simplification, les tension et écrasement de l'organe 9, sont désignés indifféremment par C sur les figures puisque l'écrasement matérialisé par le moyen 21 est le résultat de cette tension. De même, c'est la raison pour laquelle on désigne les moyens de tensions C et d'écrasement indifféremment par 21. En comparant les figures 6 et 8 par exemple, on comprend bien que l'écrasement qui tend à rendre l'ensemble 12 plus compact suivant la direction axiale X, est le résultat de la tension C. Autrement dit, la tension C a pour effet le coulissement de l'organe 9 de gauche à droite selon l'axe X dans le carter 19 selon les figures 6 et 7. Ce mouvement opère l'enfoncement encore dit « écrasement » de l'organe 9 dans le carter 19.

Dans l'exemple des figures 2 et 5, le moyen 13 de rapprochement comporte de manière générale :

- une motorisation 22 de rapprochement, commune aux ensembles 15 de mise en coïncidence et 17 d'engagement effectif, ici un moteur électrique ; et

- un organe 23 de transformation mécanique du mouvement de pivotement issu de la motorisation 22, en coulissement axial de l'organe amont 9.

Ici, l'organe 23 de transformation mécanique est agencé pour permettre également (éventuellement en simultané, bien que ceci ne soit pas conseillé) le mouvement de rotation de l'organe amont 9 qui sert à la mise en coïncidence.
Dans ce mode d'exécution, l'organe 23 de transformation comporte en suivant sa chaîne cinématique :

- un arbre 24 primaire, relié fonctionnellement en entrée à la motorisation 22 et avec une vis sans fin 25 de sortie ;

- un assemblage intermédiaire de renvoi d'angle et/ou démultiplication, avec un axe 26 intermédiaire avec une couronne 27 dentée motrice en prise avec la vis sans fin 25, ainsi qu'une vis sans fin 28 intermédiaire en sortie et un arbre 29 de sortie de guidage en rotation d'un secteur 30 à dents intermédiaire, qui collabore en entrée avec la vis sans fin 28 intermédiaire, l'arbre de sortie guidant en rotation un secteur à dents 31 décalé ; et

- une barre 32 de transmission de l'organe amont 9, pourvue d'épaulements 33 périphériques disposés pour engrener avec le secteur 31 décalé de l'assemblage intermédiaire, de sorte qu'une rotation au sein de cet assemblage intermédiaire provoque le coulissement axial de la barre 32 de transmission, par poussée sur des épaulements 33.

A cette fin, les épaulements 33 sont espacés axialement et périphériques. Ils (33) forment en alternance axiale, des couronnes et gorges à fonds sensiblement toriques. Ces épaulements 33 transmettent ainsi les tensions C et écrasement ou déplacement D de la barre 32 via le secteur 31 et les éléments associés et font par suite partie du moyen 21 et du moyen 13.
Dans une réalisation, le moyen 14 d'échec est piloté par une temporisation 35, apte à provoquer un renversement du sens d'activation de la motorisation 22 de rapprochement, à l'issue d'une période prédéterminée de temporisation, par exemple de l'ordre de 5 à 6 secondes.
Pour éviter tout coincement en cas de non-engagement, l'organe 34 intervient pour limiter l'effort de pénétration.
Selon une autre réalisation, le moyen 14 d'échec est piloté par un organe 34 de limitation similaire, par exemple intégré à la motorisation 22 de rapprochement.
Au-delà d'une valeur prédéterminée d'effort de seuil, l'organe 34 de limitation est activé de façon à provoquer un renversement du sens d'activation de la motorisation 22 de rapprochement, éventuellement à l'issue d'une période prédéterminée de temporisation.
Par exemple, l'organe 34 de limitation est fonctionnellement relié à un organe 36 de détection d'une valeur d'effort, apte à déterminer si cet effort est ou non supérieur à la valeur prédéterminée d'effort de seuil.
Cet organe 36 de détection, est par exemple un capteur intégré à la motorisation 22.
Dans d'autres réalisations, l'organe 36 comporte un micro-commutateur par contact, sensible au rapprochement D et apte à déterminer qu'il (D) n'aboutit pas, lorsqu'une détection de départ n'est pas suivie à l'issue de la période de temporisation, par une détection d'arrivée dans une position de fin de course de rapprochement D.
On décrit à présent un moyen 37 d'appairage en rotation de l'organe 9, avec un élément 38 de guidage angulaire mécanique, qui présente une forme générale de douille sur les figures 5 à 15.
Sur les figures 10 à 15, le moyen 37 est inactif puisque, alors, la barre 32 est découplée de l'élément 38 de guidage.
À l'inverse, sur les figures 6 à 9, le moyen 37 est actif, puisqu'à ce moment la barre 32 est appairée à l'élément 38 de guidage.
Cet élément 38 de guidage est agencé pour coopérer avec le moyen 21 de tension, afin d'obtenir l'appairage.
Selon cette réalisation, le moyen 37 d'appairage de l'ensemble 15, comporte un organe désigné de façon générale par 39 de plaquage local de l'organe 9 amont contre l'élément 38 (organe 39 relatif à une opération 39 de plaquage local) de guidage. Bien que fonctionnellement distinct, cet organe 39 de plaquage est confondu dans ce mode de réalisation, avec le moyen 21 qui assure la tension C.
Plus en détail, le moyen 37 d'appairage comporte du côté de la barre 32, un flasque 40 tronconique. Ce flasque 40 présente ici des gorges 41 de mordant et en saillie radiale de la barre 32 de transmission de l'organe 9.
Le flaque 40 est apte à subir le plaquage axial évoqué, contre une cavité 42 (figures 14 et 15) de l'élément 38 de guidage, elle aussi tronconique.
Les gorges 41 visent à faciliter l'ancrage et ainsi l'unification en rotation entre le flaque 40 et la cavité 42.
Intérieurement, la cavité 42 est revêtue d'un constituant par exemple en forme de bague, en matière 44 ductile (Figures 14 et 15) telle que de l'aluminium. De la sorte, l'ancrage entre le flaque 40 et la cavité 42 est opéré avec une prise mutuelle appropriée.

Toujours sur les figures 14 et 15, cette cavité 42 tronconique du moyen 37 est de forme sensiblement complémentaire à celle du flasque 40, et définit par sa face arrière 43 une butée avant prévue pour être sollicitée par le moyen 21 de tension.

Toujours selon cette réalisation, la cavité 42 tronconique est agencée pour agir à l'encontre de l'action d'un organe 45 producteur d'une force de congé, à libérer lors d'un réarmement de l'ensemble 12 qui sera expliqué plus loin.

La force de congé produite par l'organe 45 est mécanique et axiale, en opposition avec le rapprochement C.

Dans cet exemple, l'organe 45 produit une déformation élastique par bandage, puisqu'il est ici en forme de ressort hélicoïdal.

Toujours selon cet exemple, l'organe 45 est monté axialement entre la butée 43 arrière de l'élément 38 de guidage et une butée 46 avant du référentiel statique 20, et sous forme ici de plateau à aiguilles de découplage. Le plateau à aiguilles qui forme la butée 46 libère le référentiel 20 des couples transmis et générés par le ressort de l'organe 45.

Les mouvements et liaisons fonctionnels évoqués aboutissent vers un moyen désigné de façon générale par 47 de déphasage (moyen 47 relatif à une phase 47 de déphasage) de l'organe 9 par rapport à l'organe 10.

Sur les figures 6 à 15, on voit que le moyen 47 de déphasage comporte notamment un organe 48 de guidage angulaire ici intégré à l'élément 38 de guidage pour ne former qu'une seule pièce.

Cet organe 48 est apte à glisser contre un constituant dédié du référentiel 20 statique, avec une composante axiale (X) issue de la tension C ainsi qu'une composante résultante de rotation relativement à l'organe aval 10.

Cette composante résultante provoque la rotation de déphasage de l'organe amont 9.

Sur ces figures, l'élément 38, et donc l'organe 48 de guidage angulaire du moyen 47 de déphasage, comporte une paire d'organes 49 formant glissières locales, agencées pour coopérer avec un organe 50 unique formant palpeur.

Cet organe 50 formant palpeur de guidage est, quant à lui, le constituant dédié au déphasage du référentiel 20 statique.

Dans cet exemple, l'organe 49 formant glissière forme une paire de lumières oblongues inclinées et en regard l'une de l'autre diagonalement

L'organe 50 formant palpeur possède un doigt traversant et disposé en saillie radialement à l'intérieur de chaque lumière 49.

À travers le mode de réalisation des figures 3 et 4, l'organe 9 amont possède trente deux parties 11A en saillie, ici des cannelures.

Le mode opératoire de la détermination de l'inclinaison donnée à l'organe 48 qui définit une amplitude Â angulaire du déphasage obtenu est exposé ci-après.

Chaque lumière 49 oblongue est ici inclinée d'une amplitude de guidage de l'ordre de Â degrés de sensiblement de 1,5˚ à 2,5˚.

D'autres réalisations prévoient des amplitudes Â comprises entre 0,5˚ et 10˚, par exemple entre 0,5˚ et 5˚.

Afin de viser à ce que l'amplitude de guidage Â soit de l'ordre de la valeur angulaire en degrés, correspondant à celle qui est couverte par sensiblement un quart à une demie partie 11A saillante (ou 11B concave) à engager, une approche est proposée.

Selon cette approche, l'organe 48 de guidage angulaire du moyen 47 de déphasage, est disposé (ici incliné) pour pouvoir provoquer un déphasage sur une amplitude de guidage de l'ordre de Â degrés, avec :

$$[\hat{A} \neq 360 / N \times E \times R], \text{ et } [(90 / N) < R < (360 / N)]$$

où :

N : est le nombre de parties saillantes ou concaves à engager ;

E : est un entier non nul, par exemple égal à 1 ; et

R : est un facteur prédéterminé de guidage angulaire.

Bien sûr, l'amplitude Â couvre dans des réalisations, celle d'une à plusieurs parties 11 entière(s), voire tours de l'organe 9 amont, plus une valeur telle que celle d'un quart ou d'une demie partie 11 dans l'exemple plus haut.

Après avoir exposé le déphasage, on présente les réalisations permettant un réarmement du système de mise en coïncidence.

Il convient en effet d'éviter que l'amplitude Â de déphasage (par exemple dans le sens de rotation trigonométrique) de l'organe amont 9 par rapport à l'organe aval 10, ne soit pas annihilée lors d'un retour axial (X) en position de cet organe amont 9.

Autrement dit, il convient que durant ce retour axial, il ne se produise pas une rotation en sens contraire à celui du déphasage (par exemple dans le sens de rotation horaire) de l'organe amont 9 par rapport à l'organe aval 10.

Sur les figures 5 à 15 ce réarmement est automatisé, et pris en charge par un ensemble désigné en 51 de façon générale.

On verra que, comme pour les autres fonctions (mise en coïncidence et entraînement notamment), les réalisations illustrées ont visé à mutualiser le plus possible de constituants du dispositif 6, en les employant à plusieurs fins, parfois de manière distincte (e.g : sens avant - arrière pour la tension/sens arrière - avant pour le rapprochement).

Notamment, l'ensemble 51 de réarmement automatisé met en oeuvre :

- un moyen 52 de verrouillage mutuel en rotation de l'élément 38 de guidage angulaire avec le référentiel 20 statique ;

- l'organe 36 détecteur de fin de course, commun au moyen 21 de tension mécanique, et agencé également pour provoquer l'activation du moyen 13 de rapprochement ;

- des moyens de cessation d'appairage de l'organe amont avec l'élément de guidage ; et

- des moyens 53 de cessation de verrouillage de l'élément 38 de guidage avec le référentiel 20 statique, tel que généré par le moyen 52, une fois le réarmement effectué.

Bien qu'exerçant des fonctions opposées, les moyens 52 et 53, respectivement de verrouillage et déverrouillage de l'ensemble 51, sont ici matérialisés en grande partie par des constituants communs.

Dans la réalisation des figures 6 à 15, le moyen 52 de verrouillage mutuel de l'ensemble 51 est en fait fonctionnellement relié au moyen 21 de tension mécanique de façon à provoquer mécaniquement le verrouillage voulu, par une opération E d'interposition radiale (voir figure 13) dans le sens centrifuge de galets 54 formant un verrou effaçable.

Dans cet exemple, le moyen 52 comporte quatre galets effaçables 54 montés mobiles (opération E d'interposition radiale dans le sens centrifuge ou en sens inverse centripète pour le déverrouillage) à intervalles angulaires régulièrement répartis, en circonférence d'un évidement 55 périphérique de l'élément 48 de guidage.

Par ailleurs, pour chaque galet 54 effaçable, est prévu un poussoir 56 radial, ici en forme de bille et un moyen de plaquage centripète de ce galet (ressort,...).

Ici, chaque galet 54 est guidé dans un logement approprié du référentiel 20 statique, à coulissement radial. Chaque poussoir 56 à bille est guidé dans un perçage radial de l'élément 48 de guidage, qui débouche vers l'extérieur en regard du logement approprié du référentiel 20 et vers l'intérieur dans un alésage axial de l'élément 48.

Dans cet alésage axial de l'élément 48, une extrémité axiale de la barre 32 de l'organe 9 peut coulisser axialement. Cette extrémité axiale de la barre 32 est pourvue d'un goulet 57 d'embout encore dit embout arrière, c'est-à-dire à la droite de la barre 32, de diamètre externe complémentaire avec jeu, à celui de l'alésage. À l'avant du goulet 57, c'est à dire à sa gauche, la barre 32 est pourvue d'un dégagement de repli radial centripète des poussoirs 56.

De fait, chaque poussoir 56 monté coulissant (E) dans un perçage radial de l'élément 38 est apte à être repoussé radialement vers l'extérieur par le goulet 57 d'embout arrière de l'organe 9 amont afin de le déplacer effectivement radialement vers l'extérieur.

Le galet effaçable 54 correspondant est ainsi rendu mobile entre :

- une position de verrouillage (figures 6 à 11) où il est à la fois dans l'évidement 55 périphérique de l'élément 48 et en prise avec le référentiel 20 statique ; et

- une position de libre pivotement (i.e. déverrouillée, figures 12 à 15) relatif de l'élément 48 et du référentiel 20, suite à l'opération E d'interposition radiale dans le sens centrifuge,

où il est hors de l'évidement 55 et plaqué contre une paroi 58 intérieure du référentiel 20, par son poussoir 56 correspondant.

Selon cette réalisation, le dispositif 6 et le système 5 de mise en coïncidence prévoient que l'organe 9 amont est un organe moteur, comme on l'a évoqué plus tôt.

On comprend bien maintenant quels sont ses constituants qui lui permettent de s'engager avec la boîte 4 (BTP) de l'appareil 1 afin d'ajuster l'azimut des pales 2. A ce stade toutefois, n'a pas été exposé le constituant du dispositif 6 qui fournit la force motrice à cette fin. Il s'agit sur les figures d'une motorisation 59 principale d'entraînement.

C'est à cette motorisation 59 principale que l'organe 10 aval est couplé via l'organe 9, pour être entraîné.

Cet organe 10 aval, tout comme l'organe 9 amont comporte en vue de leur couplage, à une extrémité 60 libre respective de chacun (telle que celle qui est illustrée en détails sur les figures 3 et 4) les parties saillantes 11A et concaves 11B en forme de cannelures, à embouts 61 avant biseautés.

Concernant l'organe 9, notons ici que la barre 32 de transmission est constamment sollicitée, à proximité de son extrémité libre de couplage, par un moyen 62 de rattrapage de jeu axial (X) de l'avant vers l'arrière (figure 5).

Dans les réalisations illustrées, le dispositif 6, et donc le système 5, est agencé de sorte que la motorisation principale 59 est reliée à l'organe 9 amont, et donc à l'organe 10 aval lors de leur accouplement, de manière à ce que ce dernier soit alors entraîné en rotation, via un moyen 63 de réduction, aussi appelé moyen de découplage.

Ce moyen 63 de réduction est visible dans l'exemple des figures 2 et 5 notamment. Ici, il (63) s'agit d'un train 64 épicycloïdal fonctionnellement relié en entrée à une roue 65 dentée de sortie de la motorisation 59 principale, ici sous forme de moteur électrique asynchrone.

Dans cet exemple, de l'avant à l'arrière axialement (de gauche à droite selon la direction X), la barre 32 de transmission comporte, en embout les cannelures de couplage 11, un tronçon d'entraînement de l'organe amont 9 via le moyen 63 de réduction, les épaulements 33, le flasque 40 et le goulet 57 d'embout arrière qui opère l'emprise et le relâchement des galets 54 formant verrous de réarmement.

La plupart des aspects matériels de l'invention étant exposés, il est maintenant possible d'expliquer la méthode selon laquelle est entraîné en rotation à l'aide de l'organe 9 amont, une fois couplé, l'organe 10 aval.

À cette fin, le système 5 de mise en coïncidence évoqué est bien employé, de même que le dispositif 6.

Selon les exemples non limitatifs dans le cadre desquels est décrite l'invention, cette méthode permet d'assurer une indexation automatique en azimut des pales 2 de l'aéronef 1 à voilure tournante.

Dans ces exemples, il est procédé comme suit.

Le frein 8 d'immobilisation du rotor 3 est serré préalablement à l'étape 5 de mise en coïncidence, et notamment lors d'étapes 12 de tentative d'accouplement et 17 d'engagement effectif.

Par contre, ce frein 8 est desserré suite à l'étape 17 d'engagement effectif, lors de la transmission du mouvement B de rotation depuis l'organe 9 amont vers l'organe 10 aval, lesdits organes étant fonctionnellement solidaires de la boite 4 de transmission principale de l'appareil 1.

Une mise en oeuvre est telle que, cette méthode prévoit successivement :

- un état de demande de desserrage du frein 8, suivi de sa validation, le tout préalablement à la transmission du mouvement de rotation depuis l'organe en amont vers l'organe aval ;

- l'étape 5 de transmission du mouvement de rotation depuis l'organe en amont vers l'organe en aval jusqu'à mise à l'azimut prédéterminé des pales 2, par rotation du rotor 3 sous l'effet de la motorisation 59 principale ; et

- un état de demande de serrage du frein 8, suivi de sa validation.

Dans certains appareils 1, les états de demandes de serrage/desserrage du frein 8, ainsi que leurs validations, sont effectuées manuellement, par exemple par le pilote ou son mécanicien de bord.

À cette fin, des informations de demandes d'action (serrage/desserrage) et/ou de validations, dans l'exemple de la figure 1, sont visuelles et fournies au pilote par l'intermédiaire d'un panneau 66 de commande.

Ces demandes d'action (serrage/desserrage) et/ou de validations sont ici acquittables via un contrôleur 67, dédié tout comme le panneau 66. Les panneau 66 et contrôleur 67 sont alors typiquement dans un poste de pilotage 68 de l'appareil 1.

Une autre mise en oeuvre est telle que ces états de demandes de serrage/desserrage du frein 8, ainsi que leurs validations, sont au moins en parties effectuées automatiquement.

Dans un tel exemple, l'appareil 1 comporte en général un réseau (symbolisé en 69 sur la figure 5) de dédoublage des informations de demande et validation, pour éviter tout risque de freinage du rotor 3 en vol de l'aéronef 1.

Que le serrage du frein 8 soit manuel ou automatique, il convient que l'appareil 1 possède des moyens 70 de commande de repliage de ses pales 2. Typiquement, comme sur la figure 1, lorsque le serrage du frein 8 est manuel, cette commande 70 est souvent située dans le poste de pilotage 68. A l'inverse, si le serrage du frein 8 est automatique, cette commande 70 automatique est souvent située à un autre emplacement de l'appareil 1, par exemple au sein d'une unité de traitement.

Maintenant, on comprend bien comment le dispositif 6 d'entraînement permet de mettre en oeuvre la méthode d'entraînement évoquée.

Lorsqu'il convient d'assurer automatiquement une indexation en azimut des pales 2, ce dispositif 6 comporte et/ou est fonctionnellement relié notamment aux :

- frein 8 d'immobilisation du rotor, ce dernier étant par exemple de type électrique ;

- panneau 66 d'affichage d'états de commandes, d'informations et de validations de l'indexation automatique ;

- contrôleur 67 dédié d'états d'indexation automatique ; et

- réseau 69 de dédoublage des informations de demandes et validations d'étapes d'états de commandes, le cas échéant.

Brièvement, en considérant que les figures 6 à 15 illustrent un déroulement chronologique de la mise en coïncidence, cet exemple du procédé de l'invention peut se résumer comme suit.

Depuis la position des figures 6 et 7, on débute l'opération par la rentrée de la barre 32 suivant la direction X et le sens de tension C. Notons qu'alors, le ressort 45 formant l'organe producteur de force, n'est pas bandé, et la douille 38 formant l'élément de guidage est plaquée contre la butée 43. L'organe 50 formant palpeur est axialement en bout arrière de la rampe formant organe de glissement 49.

Sur les figures 8 et 9, on observe la fin de course de rentrée de la barre 32, où s'opère la phase 47 de déphasage. C'est aussi alors que les galets 54 formant verrous, opèrent leur tombée, c'est-à-dire la phase de verrouillage 52. Le ressort 45 est complètement bandé. Ici, l'organe 50 formant palpeur est axialement au bout avant (opposé à celui des figures 6 et 7) de la rampe formant organe de glissement 49. Notons enfin que le flasque 40 est couplé à la cavité 42, pour assurer la phase 37 d'appairage.

Sur les figures 10 et 11, on observe la phase 13 de rapprochement D, qui coïncide avec le début de la phase 53 de déverrouillage, les poussoirs 56 en forme de billes étant axialement en regard du goulet 57 avant leur rentrée centripète. Le flasque 40 est sorti suivant le nouveau rapprochement D de la cavité 42, pour assurer la phase de cessation de l'appairage 37.

Sur les figures 12 et 13, la phase 13 de rapprochement D continue, et on observe la phase 53 effective avec le mouvement E dans le sens centrifuge des galets 54. Ce sont des phases (13, 53) de l'étape 51 de réarmement. On a ainsi évité que durant ce retour axial, il se produise une rotation en sens contraire à celle du déphasage 47.

Sur les figures 14 et 15, on observe la fin de la phase 13 de rapprochement D, les poussoirs 56 en forme de billes ayant passé le goulet 57 et fini leur rentrée centripète. Le ressort 45 est complètement bandé, et la position de butée avant de la barre 32 est à même d'être détectée par l'organe 36 formant capteur.

Au-delà des exemples appliqués à l'appareil 1, reprenons maintenant des possibilités générales d'un procédé de mise en coïncidence selon l'invention.

Reprenons dans l'exemple de l'aéronef 1, le procédé opéré par le système 5 de mise en coïncidence.

Ce procédé prévoit qu'au moins l'étape 5 de mise en coïncidence est automatisée, et comporte :

- une phase 21 de tension mécanique, en cas de phase 14 d'échec, qui opère une tension C de l'organe amont sensiblement suivant la direction de la phase 13 de rapprochement (D), mais suivant un sens inverse ;

- une phase 37 d'appairage en rotation de l'organe 9 amont, avec au moins un élément mécanique de guidage angulaire, sous l'effet de la phase de tension ; et

- une phase 47 de déphasage de l'organe 9 amont par rapport à l'organe 10 aval, sous l'effet de la phase de tension, provoquée par une opération (48-49) de guidage angulaire de l'élément mécanique appairé à l'organe amont, contre un référentiel 20 statique, en rotation relativement à l'organe aval.

Selon une mise en oeuvre, ce procédé prévoit que la phase 13 de rapprochement et/ou la phase 21 de tension mécanique est obtenue au moins en partie par coulissement axial et/ou coulissement radial et/ou renversement autour d'un axe de pivotement.

Par exemple, cette phase 13 de rapprochement est entièrement réalisée par coulissement axial, de sorte que la phase d'écrasement à effort restreint est opérée axialement (X) en sens inverse à celui du rapprochement.

Selon une mise en oeuvre, la phase 14 d'échec de l'étape de tentative d'accouplement est déclenchée à l'issue d'une période prédéterminée de temporisation, par exemple de 5 à 6 secondes provoquant un renversement du sens d'activation d'une motorisation 22 du rapprochement.

Selon une mise en oeuvre, la phase 14 d'échec est issue d'une opération 34 de limitation de l'effort généré par la phase de rapprochement sur l'organe amont, au-delà d'une valeur prédéterminée d'effort de seuil, cette opération 34 de limitation d'effort provoquant un renversement du sens d'activation d'une motorisation 22 de rapprochement

Ici aussi, la phase d'échec peut intervenir à l'issue d'une période prédéterminée de temporisation.

Par exemple la période prédéterminée de temporisation présente une durée de l'ordre de 5 à 6 secondes, à compter du début de la phase de rapprochement.

Selon une mise en oeuvre, la phase 21 de tension mécanique est opérée par renversement du sens d'activation d'une motorisation 22 commune à la phase 13 de rapprochement des parties complémentaires de l'étape de tentative d'accouplement.

Par exemple, la phase 13 de rapprochement est axiale et obtenue par une opération 23 de transformation mécanique d'un mouvement de pivotement issu de la motorisation 22 commune de rapprochement, cette opération 23 de transformation mécanique étant compatible, éventuellement simultanément, avec le mouvement B de rotation à transmettre par l'accouplement de l'organe 9 amont vers l'organe 10 aval.

Selon une mise en oeuvre, la phase 21 de tension est opérée à l'encontre d'une force (organe 45) mécanique de congé qui est destinée à être emmagasinée lors de l'étape 15 de mise en coïncidence, puis libérée lors d'une étape 51 de réarmement.

Par exemple la phase 21 de tension est axiale et/ou la force mécanique de congé est emmagasinée par une opération de déformation élastique telle que bandage d'un ressort 45 ou analogue.

Selon une mise en oeuvre, la phase 37 d'appairage de l'étape 15 de mise en coïncidence est au moins en partie obtenue par une opération 39 de plaquage local de l'organe 9 amont contre l'élément 38 de guidage. Cette opération 39 de plaquage local provoque un frottement mutuel de l'organe 9 amont contre l'élément 38 à même de les immobiliser temporairement l'un par rapport à l'autre sous l'effet de la phase 21 de tension mécanique et éventuellement d'une force mécanique de congé.

Selon une mise en oeuvre, l'opération 39 de guidage angulaire de la phase 47 de déphasage est au moins en partie obtenue par un glissement local relatif de l'élément 38 contre le référentiel 20.

Cette opération 39 de guidage angulaire est provoquée sur une amplitude Â de l'ordre de quelques degrés, telle que :

$$[\text{Â} \neq 360 / N \times E \times R], \text{ et } [(90/N) < R < (360/N)]$$

où:

    N : est le nombre de parties saillantes ou concaves à engager;

    E : est un entier non nul, par exemple égal à 1 ; et

    R : est un facteur prédéterminé de guidage angulaire.

Par exemple, l'amplitude de guidage Â est de l'ordre de la valeur angulaire en degrés correspondant à celle qui est couverte par sensiblement un quart à une demie partie 11A saillante ou concave 11B à engager.

Selon une mise en oeuvre, ce procédé prévoit une étape 51 de réarmement automatisée, avec :

- une phase 52 de verrouillage mutuel en rotation de l'élément mécanique de guidage angulaire avec le référentiel statique, au moins en partie ultérieurement à la phase de déphasage et notamment à l'opération de guidage angulaire, cette phase de verrouillage étant provoquée mécaniquement par la phase de tension mécanique, par exemple par interposition radiale dans le sens centrifuge de verrous alors poussés par l'organe amont, entre l'élément mécanique et le référentiel statique ;

- puis une opération 50 de fin de course de la phase de tension mécanique, au moins en partie ultérieure à l'opération de guidage angulaire, l'opération 50 de fin de course de tension provoquant une nouvelle phase de rapprochement ; et

- lors de cette nouvelle phase 13 de rapprochement D, des opérations distinctes de cessation d'appairage de l'organe 9 amont avec l'élément 38 de guidage et une phase 53 de cessation du verrouillage 52 de l'élément de guidage avec le référentiel statique.

Selon une mise en oeuvre, l'opération de fin de course de tension provoque la nouvelle phase de rapprochement D suite à une opération 36 de détection d'une position maximale de tension.

Par exemple, cette nouvelle phase 13 de rapprochement D est axiale (X) et obtenue par une opération 23 de transformation d'un mouvement de pivotement issu de la motorisation 22 commune de rapprochement, via une chaîne (24 à 31 et 33) mécanique réversible à obstacles complémentaires, cette chaîne (24 à 31 et 33) de transformation étant compatible, éventuellement simultanément, avec le mouvement B de rotation à transmettre par l'accouplement de l'organe 9 amont à l'organe 10 aval.

Selon une mise en oeuvre, l'opération de cessation de verrouillage provoque d'abord une libération d'une force mécanique de congé, et sous l'effet de la force mécanique de congé, un retour en position étendue de butée 43 de l'élément 38 de guidage contre le référentiel 20.

Selon une mise en oeuvre, ce procédé prévoit qu'au moins l'étape 15 de mise en coïncidence est répétée jusqu'à correspondance des parties 11A saillantes et concaves 11B complémentaires, suite à quoi l'étape 17 effective d'accouplement est autorisée.

Selon une mise en oeuvre, ce procédé prévoit que l'organe amont est un organe moteur, tandis que l'organe aval est un organe à entraîner.

Selon une mise en oeuvre, une fois autorisée l'étape 17 effective d'accouplement, est débutée via la liaison non permanente accouplée par obstacles, la transmission d'un mouvement B de rotation entre l'organe amont et l'organe aval.

Par exemple, cette transmission de mouvement B de rotation est opérée sous l'effet d'une motorisation 59 principale distincte d'une motorisation 22 de rapprochement, par l'intermédiaire d'une phase 63 de découplage de réduction qui agit en sortie par une opération d'emboîtement (et un organe éponyme) de solidarisation en rotation avec l'organe amont.

### Revendications

1. Procédé de mise en coïncidence avant accouplement de parties (11A) saillantes avec des parties (11B) concaves complémentaires, et inversement, d'un organe (9) amont et d'un organe (10) aval, au sein d'une liaison non permanente par obstacle prévue pour la transmission d'un mouvement (B) de rotation entre ces organes (9, 10), ce procédé prévoyant une étape (12) de tentative d'accouplement avec une phase (13) de rapprochement des parties (11A, 11B) complémentaires et une phase (14) d'échec de la tentative si des parties (11A) saillantes de l'organe (9) sont sensiblement en regard de parties saillantes (11A) de l'autre organe (10) à accoupler, une étape (15) de mise en coïncidence angulaire en cas de phase (14) d'échec par au moins une opération (16) de rotation relative des parties (11A) en regard ainsi qu'une étape (17) d'engagement effectif de la liaison de transmission de mouvement lorsque les parties (11) complémentaires de l'organe (9) sont sensiblement en coïncidence avec celles de l'autre organe (10) ;
**caractérisé en ce que** ce procédé prévoit qu'au moins l'étape (15) de mise en coïncidence est automatisée, et comporte :

   - une phase (21) de tension mécanique, en cas de phase (14) d'échec, qui opère une tension (C) de l'organe (9) sensiblement suivant la direction (X) de la phase 13 de rapprochement (D), mais suivant un sens inverse ;
   - une phase (37) d'appairage en rotation de l'organe (9), avec au moins un élément (38) mécanique de guidage angulaire, sous l'effet de la phase (21) de tension ; et
   - une phase (47) de déphasage de l'organe (9) amont par rapport à l'organe (10) aval, sous l'effet de la phase (21) de tension, provoquée par une opération (48-49) de guidage angulaire de l'élément (38) appairé à l'organe amont, contre un référentiel (20) statique en rotation relativement à l'organe (9) amont.

2. Procédé selon la revendication 1,
**caractérisé en ce qu'**il prévoit que la phase (13) de rapprochement et/ou la phase (21) de tension mécanique est obtenue au moins en partie par coulissement axial et/ou coulissement radial et/ou renversement autour d'un axe de pivotement, cette phase (13) de rapprochement (D) étant par exemple entièrement réalisée par coulissement axial, de sorte que la phase (21) opère un écrasement à effort restreint dirigé axialement (X) en sens inverse à celui du rapprochement (D).

3. Procédé selon la revendication 1 ou 2,
**caractérisé en ce qu'**il prévoit que la phase (14) d'échec de l'étape (12) de tentative d'accouplement est issue d'une temporisation et/ou d'une opération (34) de limitation de l'effort généré par la phase (13) de rapprochement sur l'organe (9) amont au-delà d'une valeur prédéterminée d'effort de seuil, cette phase d'échec (14) provoquant un renversement du sens d'activation d'une motorisation (22) de rapprochement, éventuellement à l'issue d'une période prédéterminée de temporisation qui présente par exemple une durée de l'ordre de 5 à 6 secondes, à compter du début de la phase (13) de rapprochement ou de l'opération (34) de détection d'une valeur d'effort, supérieure à la valeur prédéterminée d'effort de seuil.

4. Procédé selon la revendication 2,
**caractérisé en ce que** la phase (21) de tension mécanique est opérée par renversement du sens d'activation d'une motorisation (22) commune à la phase (13) de rapprochement des parties complémentaires de l'étape de tentative d'accouplement par exemple de sorte que la phase (13) de rapprochement est axiale et obtenue par une opération

(23) de transformation mécanique d'un mouvement de pivotement issu de la motorisation (22) commune de rapprochement, cette opération (23) de transformation mécanique étant compatible, éventuellement simultanément, avec le mouvement (B) de rotation à transmettre par l'accouplement de l'organe (9) amont vers l'organe (10) aval.

**5.** Procédé selon l'une des revendications 1 à 4,
**caractérisé en ce que** la phase (21) de tension est opérée à l'encontre d'une force (45) mécanique de congé qui est destinée à être emmagasinée lors de l'étape (15) de mise en coïncidence, puis libérée lors d'une étape (51) de réarmement, par exemple de sorte que la phase (21) de tension est axiale et/ou la force mécanique de congé est emmagasinée par une opération de déformation élastique telle que bandage d'un ressort (45) ou analogues.

**6.** Procédé selon l'une des revendications 1 à 4,
**caractérisé en ce qu'**une phase (37) d'appairage de l'étape (15) de mise en coïncidence est au moins en partie obtenue par une opération (39) de plaquage local de l'organe (9) amont contre l'élément (38) de guidage, par exemple de sorte que cette opération (39) de plaquage local provoque un frottement mutuel de l'organe (9) amont contre l'élément (38) à même de les immobiliser temporairement l'un par rapport à l'autre (9-10) sous l'effet de la phase (21) de tension mécanique et éventuellement d'une force mécanique de congé.

**7.** Procédé selon la revendication 6,
**caractérisé en ce que** l'opération (39) de guidage angulaire de la phase (47) de déphasage est au moins en partie obtenue par un glissement local relatif de l'élément (38) contre le référentiel (20) statique.

**8.** Procédé selon la revendication 6 ou 7,
**caractérisé en ce que** cette opération (39) de guidage angulaire est provoquée sur une amplitude ($\hat{A}$) de l'ordre de quelques degrés, telle que :

$$[\hat{A} \neq 360 / N \times E \times R],$$

et

$$[(90 / N) < R < (360 / N)] \text{ où :}$$

N : est le nombre de parties saillantes ou concaves à engager;
E : est un entier non nul, par exemple égal à 1 ; et
R : est un facteur prédéterminé de guidage angulaire;
et de sorte que par exemple l'amplitude de guidage ($\hat{A}$) est de l'ordre de la valeur angulaire en degrés correspondant à celle qui est couverte par sensiblement un quart à une demie partie (11A) saillante ou concave (11B) à engager.

**9.** Procédé selon l'une des revendications 6 à 8,
**caractérisé en ce que** l'opération (39) prévoit une étape (51) de réarmement automatisée, avec :

- une phase (52) de verrouillage mutuel en rotation de l'élément (38) mécanique de guidage angulaire avec le référentiel (20) statique, au moins en partie ultérieurement à la phase (47) de déphasage et notamment à l'opération (48 ; 49) de guidage angulaire, cette phase (52) de verrouillage étant provoquée mécaniquement par la phase (21) de tension mécanique, par exemple par interposition radiale dans le sens centrifuge de verrous (54) alors poussés par l'organe (9) amont, entre l'élément (38) mécanique et le référentiel statique ;
- puis une opération (50) de fin de course de la phase de tension mécanique, au moins en partie ultérieure à l'opération de guidage angulaire, l'opération (50) de fin de course de tension provoquant une nouvelle phase (13) de rapprochement (D) ; et
- lors de cette nouvelle phase (13) de rapprochement (D), des opérations distinctes de cessation d'appairage (37) de l'organe (9) amont avec l'élément (38) de guidage et une phase (53) de cessation du verrouillage (52) de l'élément (38) de guidage avec le référentiel (20) statique.

**10.** Procédé selon la revendication 9,
**caractérisé en ce que** l'opération de fin de course de tension provoque la nouvelle phase (13) de rapprochement (D) suite à une opération (36) de détection d'une position maximale de tension, par exemple de sorte que cette nouvelle phase (13) de rapprochement (D) est axiale (X) et obtenue par une opération (23) de transformation d'un mouvement de pivotement issu de la motorisation (22) commune de rapprochement, via une chaîne (24 - 31 ; 33) mécanique réversible à obstacles complémentaires, cette chaîne de transformation étant compatible, éventuellement simultanément, avec le mouvement (B) de rotation à transmettre par l'accouplement de l'organe (9) amont à l'organe (10) aval.

11. Procédé selon l'une des revendications 6 à 10,
    **caractérisé en ce que** l'opération de cessation (53) du verrouillage (52) provoque d'abord une libération d'une force mécanique de congé, et sous l'effet de la force mécanique de congé, un retour en position étendue de butée (43) de l'élément (38) de guidage contre le référentiel (20).

12. Procédé selon l'une des revendications 1 à 11,
    **caractérisé en ce que** ce procédé prévoit qu'au moins l'étape (15) de mise en coïncidence est répétée jusqu'à correspondance des parties (11A) saillantes et concaves (11B) complémentaires, suite à quoi une étape (17) effective d'accouplement est autorisée.

13. Procédé selon l'une des revendications 1 à 12,
    **caractérisé en ce que** ce procédé prévoit que l'organe (9) amont est un organe moteur, tandis que l'organe (10) aval est un organe à entraîner.

14. Procédé selon l'une des revendications 1 à 13,
    **caractérisé en ce que**, une fois autorisée une étape (17) effective d'accouplement, est débutée via la liaison non permanente accouplée par obstacles, la transmission d'un mouvement (B) de rotation entre l'organe (9) amont et l'organe (10) aval, par exemple de sorte que cette transmission de mouvement (B) de rotation est opérée sous l'effet d'une motorisation (59) principale distincte d'une motorisation (22) de rapprochement, par l'intermédiaire d'une phase (63) de réduction qui agit en sortie d'une opération d'emboîtement en rotation avec l'organe (9) amont et/ou suite à un desserrage d'un frein (8) de blocage de l'organe (10) aval.

15. Système (5) de mise en coïncidence avant accouplement de parties (11A) saillantes avec des parties (11B) concaves complémentaires, et inversement, d'un organe (9) amont et d'un organe (10) aval, au sein d'une liaison non permanente par obstacle prévue pour la transmission d'un mouvement (B) de rotation entre ces organes (9 ; 10), ce système comportant un ensemble (12) de tentative d'accouplement, avec un moyen (13) de rapprochement des parties (11A ; 11B) complémentaires et un moyen (14) révélateur d'échec de la tentative si des parties saillantes (11A) de l'organe (9) amont sont sensiblement en regard de parties (11A) saillantes de l'organe (10) aval, un ensemble (15) de mise en coïncidence angulaire relié au moyen (14) révélateur d'échec afin de pouvoir provoquer l'activation d'au moins un organe (48-49) de rotation relative des parties (11) en regard de l'organe (9) amont et de l'organe (10) aval, et un ensemble (17) d'engagement effectif de la liaison de transmission de mouvement, agencé pour assurer l'accouplement des parties (11) complémentaires de l'organe (9) amont sensiblement en coïncidence avec celles de l'organe (10) aval, et inversement ;
    **caractérisé en ce que** l'ensemble (15) de mise en coïncidence est automatique, et comprend :

    - un moyen (21) de tension mécanique, agencé pour opérer en cas d'activation du moyen (14) révélateur d'échec, une tension de l'organe amont sensiblement suivant la direction (X) de sollicitation par le moyen (13) de rapprochement, mais suivant un sens inverse ;
    - un moyen (37) d'appairage en rotation de l'organe amont, avec au moins un élément (38) mécanique de guidage angulaire, agencé pour coopérer avec le moyen de tension afin d'obtenir l'appairage ; et
    - un moyen (47) de déphasage de l'organe amont par rapport à l'organe aval, sous l'effet du moyen de tension, avec un organe (48 ; 49) de guidage angulaire de l'élément (38), cet organe de guidage étant apte à glisser contre un référentiel (20) statique en rotation relativement à l'organe (10) aval, pour provoquer le déphasage.

16. Système (5) selon la revendication 15,
    **caractérisé en ce qu'**il (5) est apte à mettre en oeuvre le procédé de mise en coïncidence conforme à l'une des revendications 1 à 14.

17. Système (5) selon la revendication 15 ou 16,
    **caractérisé en ce que** ce système (5) prévoit que le moyen (13) de rapprochement de l'ensemble de tentative d'accouplement est agencé pour assurer un déplacement de l'organe amont relativement à l'organe aval, au moins en partie par coulissement axial et/ou coulissement radial et/ou renversement autour d'un axe de pivotement.

18. Système (5) selon l'une des revendications 15 à 17,
**caractérisé en ce que** le moyen (13) de rapprochement assure un déplacement relatif des organes amont et aval, entièrement par coulissement axial (X) de l'organe amont à l'intérieur d'un carter (19) dont est rigidement solidaire le référentiel (20) statique, le moyen de tension qui assure un écrasement à effort restreint étant agencé pour provoquer un coulissement axial de l'organe amont, mais en sens inverse à celui du coulissement axial de rapprochement, ce moyen de rapprochement comportant au moins par exemple :

   - une motorisation (22) de rapprochement, commune aux ensembles de mise en coïncidence et d'engagement effectif ; et
   - un organe (23) de transformation mécanique d'un mouvement de pivotement issu de la motorisation commune en coulissement axial de l'organe amont, cet organe de transformation mécanique étant agencé pour permettre également, éventuellement en simultané, le mouvement de rotation de l'organe amont vers l'organe aval.

19. Système (5) selon la revendication 18,
**caractérisé en ce que** cet organe (23) de transformation mécanique comporte au moins :

   - un arbre (24) primaire relié fonctionnellement en entrée à la motorisation (22) de rapprochement et avec une vis sans fin (25) de sortie ;
   - un assemblage intermédiaire de renvoi d'angle et/ou démultiplication, par exemple avec un axe (26) intermédiaire avec une couronne (27) dentée motrice en prise avec la vis (25) sans fin de sortie de l'arbre (24) primaire, ainsi qu'une vis (28) sans fin intermédiaire en sortie et un arbre (29) de sortie de guidage en rotation d'un secteur (30) à dents intermédiaire, qui collabore en entrée avec la vis (28) sans fin intermédiaire, l'arbre (29) de sortie guidant en rotation un secteur (31) à dents décalé ; et
   - une barre (32) de transmission de l'organe (9) amont, pourvue d'épaulements (33) périphériques espacés axialement et disposés pour pouvoir venir engrener avec le secteur (31) à dents décalé de l'assemblage intermédiaire, de sorte qu'une rotation au sein de cet assemblage intermédiaire provoque le coulissement axial de l'organe amont, par poussée sur des épaulements (33) périphériques.

20. Système (5) selon l'une des revendications 15 à 19, **caractérisé en ce que** le moyen révélateur d'échec est piloté par une temporisation et/ ou un organe (34) de limitation de l'effort.

21. Système (5) selon l'une des revendications 15 à 20,
**caractérisé en ce que** le moyen (37) d'appairage de l'ensemble (15) de mise en coïncidence comporte au moins un organe (39) de plaquage local de l'organe (9) amont contre l'élément (38) de guidage, par exemple un flasque (40) tronconique à gorges (41), de mordant et en saillie radiale d'une barre (32) de transmission de l'organe (9) amont, est agencé pour être apte à un plaquage (39) axial contre une cavité (42) tronconique de l'élément (38), cette cavité (42) de forme sensiblement complémentaire à celle du flasque (40) définissant une butée (43) avant prévue pour être sollicitée par le moyen (21) de tension, et est éventuellement revêtue de matière (44) tendre ou ductile telle que de l'aluminium.

22. Système (5) selon la revendication 21,
**caractérisé en ce que** la cavité (42) est agencée pour agir à l'encontre de l'action d'un organe (45) producteur de force mécanique de congé à libérer lors d'un réarmement (51), par exemple de sorte que cet organe (45) produit une déformation élastique par bandage, et est en forme de ressort ou analogue et de sorte que typiquement l'organe producteur (45) est monté axialement entre une butée (43) arrière de l'élément (38) et une butée (46) avant du référentiel (20) statique telle qu'un plateau à aiguilles de découplage.

23. Système (5) selon l'une des revendications 15 à 22,
**caractérisé en ce que** l'élément (38) de guidage angulaire du moyen (47) de déphasage comporte au moins un organe (48 ; 49) formant glissière locale, agencé pour coopérer avec au moins un organe (50) formant palpeur de guidage du référentiel (20), par exemple l'organe (48 ; 49) formant glissière comporte au moins une paire de lumières (49) oblongues inclinées et en regard l'une de l'autre diagonalement, tandis que l'organe (50) formant palpeur possède au moins un doigt traversant et disposé en saillie radialement à l'intérieur de chaque lumière (49) de la paire de lumières.

24. Système (5) selon la revendication 23,

**caractérisé en ce que** l'organe (9) amont possède trente deux parties en saillie (11A) telles que cannelures ou analogues, chaque lumière (49) oblongue de l'élément (38) de guidage angulaire étant inclinée d'une amplitude (A) de guidage de l'ordre de 0,5˚ et 10˚, notamment comprise entre 0,5˚ et 5˚, par exemple sensiblement de 1,5˚ à 2,5.

**25.** Système (5) selon l'une des revendications 15 à 24,
**caractérisé en ce que** le moyen (37) de déphasage possède un organe (48) de guidage angulaire, disposé pour pouvoir provoquer un déphasage sur une amplitude (Â) de guidage sensiblement telle que :

$$[\hat{A} \neq 360 \, / \, N \times E \times R],$$

et

$$[(90 \, /N) < R < (360 \, / \, N)]$$

où :
N : est le nombre de parties saillantes ou concaves à engager;
E : est un entier non nul, par exemple égal à 1 ; et
R : est un facteur prédéterminé de guidage angulaire ;
et de sorte que par exemple, l'amplitude (Â) de guidage est de l'ordre de la valeur angulaire en degrés correspondant à celle qui est couverte par sensiblement un quart à une demie partie saillante (11A) ou concave (11 B) à engager.

**26.** Système (5) selon l'une des revendications 15 à 25,
**caractérisé en ce que** ce système (5) comporte un ensemble (51) de réarmement automatisé, avec au moins :

- un moyen (52) de verrouillage mutuel en rotation de l'élément mécanique de guidage angulaire avec le référentiel statique ;
- un organe (36) détecteur de fin de course commun au moyen de tension mécanique, agencé pour provoquer l'activation du moyen de rapprochement ;
- des moyens de cessation d'appairage (37) de l'organe amont avec l'élément de guidage ; et
- des moyens (53) de cessation de verrouillage (52) de l'élément de guidage avec le référentiel statique.

**27.** Système (5) selon la revendication 26,
**caractérisé en ce que** le moyen (52) de verrouillage mutuel de l'ensemble de réarmement automatisé est fonctionnellement relié au moyen de tension mécanique pour provoquer mécaniquement le verrouillage par interposition radiale dans le sens centrifuge de galets (54) formant verrous effaçables, par exemple de sorte que le moyen de verrouillage mutuel comporte au moins trois galets (54) effaçables, montés mobiles à intervalles angulaires régulièrement répartis en circonférence d'un évidement (55) périphérique de l'élément mécanique de guidage, ainsi que pour chaque galet (54) effaçable, un poussoir (56) radial, notamment en forme de bille.

**28.** Système (5) selon la revendication 27,
**caractérisé en ce que** chaque poussoir (56) radial est monté coulissant dans un perçage radial de l'élément (38) de guidage et est apte à être repoussé (E) radialement vers l'extérieur par un goulet (57) d'embout arrière de l'organe amont afin de le déplacer radialement vers l'extérieur, le galet (54) effaçable correspondant étant ainsi rendu mobile entre :

- une position de verrouillage où il est à la fois dans l'évidement (55) périphérique et en prise avec le référentiel (20) ; et
- une position de libre pivotement relatif de l'élément (38) et du référentiel (20), où il (54) est hors de l'évidement (55) et plaqué contre une paroi (58) intérieure du référentiel (20) par son poussoir (56) radial correspondant.

**29.** Système (5) selon l'une des revendications 15 à 28,
**caractérisé en ce que** ce système (5) prévoit que l'organe (9) amont est un organe moteur, tandis que l'organe (10) aval est un organe à entraîner, cet organe amont comportant à une extrémité (60) libre de couplage, des parties saillantes (11A) et concaves (11B) en forme de cannelures à embouts (61) avant biseautés, par exemple de sorte que l'organe (9) amont définit une barre (32) de transmission constamment sollicitée à proximité de son extrémité libre de couplage, par un moyen (62) de rattrapage de jeu axial, de l'avant vers l'arrière.

30. Système (5) selon l'une des revendications 15 à 29,
    **caractérisé en ce que** ce système (5) comporte une motorisation (59) principale apte à entrainer l'organe aval en rotation, via un moyen (63) de découplage de réduction, tel qu'un train (64) épicycloïdal, ce moyen (63) de découplage étant fonctionnellement relié en entrée à un constituant (65) en sortie d'un moteur électrique asynchrone.

31. Méthode d'entraînement en rotation (B) à l'aide d'un organe (9) amont couplé à un organe (10) aval, mettant en oeuvre le procédé selon l'une des revendications 1 à 14 et/ou employant le système de mise en coïncidence selon l'une des revendications 15 à 30 ;
    **caractérisée en ce que**, cette méthode permet d'assurer une indexation automatique en azimut de pales (2) d'un aéronef (1) à voilure tournante, où :

    - un frein (8) apte à immobiliser un rotor (3) de support des pales est serré lors de l'étape (15) de mise en coïncidence, voire lors des étapes de tentative d'accouplement et d'engagement effectif ; et
    - ce frein (8) est desserré suite à l'étape (17) d'engagement effectif, lors de la transmission de mouvement (B) de rotation depuis l'organe amont vers l'organe aval, lesdits organes étant fonctionnellement solidaires d'une boite (4) de transmission principale de l'aéronef (1).

32. Méthode selon la revendication 31,
    **caractérisée en ce qu'**elle prévoit successivement :

    - un état de demande de desserrage du frein (8), suivi de sa validation, le tout préalablement à la transmission du mouvement de rotation depuis l'organe amont vers l'organe aval;
    - l'étape de transmission du mouvement de rotation depuis l'organe amont vers l'organe aval jusqu'à mise à un azimut prédéterminé des pales (2) par rotation du rotor (3) ; et
    - un état de demande de serrage du frein (8), suivi de sa validation.

33. Méthode selon la revendication 32,
    **caractérisée en ce que** ces états de demandes de serrage/desserrage du frein (8), ainsi que leurs validations, sont au moins en parties effectuées manuellement, par exemple en fonction d'informations notamment visuelles fournies par un panneau (66) de commande et acquittables via un contrôleur (67) dédié tout comme le panneau (66).

34. Méthode selon la revendication 32 ou 33,
    **caractérisée en ce que** ces états de demandes de serrage/desserrage du frein (8), ainsi que leurs validations, sont au moins en parties effectuées automatiquement, par exemple avec un (69) dédoublage de réseau d'informations de demandes et validations, pour éviter tout risque de freinage du rotor en vol de l'aéronef.

35. Dispositif (6) d'entraînement en rotation à l'aide d'un organe amont (9) couplé à un organe (10) aval, employant le système de mise en coïncidence selon l'une des revendications 15 à 30,
    **caractérisé en ce que** ce dispositif (6) est agencé pour assurer une indexation automatique en azimut des pales (2) d'un aéronef (1) à voilure tournante, ce dispositif (6) étant automatique et comportant au moins.

    - un frein (8) apte à immobiliser un rotor (3) de support des pales, par exemple de type électrique ;
    - un panneau (66) d'affichage d'états de commandes, d'informations et de validations de l'indexation automatique ;
    - un contrôleur (67) dédié d'états d'indexation automatique ; et
    - un réseau (69) de dédoublage des informations de demandes et validations d'étapes d'états de commandes, d'informations et de validations de l'indexation automatique.

36. Aéronef à voilure tournante tel qu'un hélicoptère, employant le système de mise en coïncidence selon l'une des revendications 15 à 30 et/ou comportant un dispositif (6) selon la revendication 35 ;
    **caractérisé en ce que** cet aéronef (1) comporte une boîte (4) de transmission principale avec une prise de couplage d'un système (5) de mise en coïncidence automatisé, un frein (8) étant apte à immobiliser un rotor (3) de support de pales (2) principales, par exemple de type électrique, et à l'intérieur d'un poste (68) de pilotage des moyens de commande (70) manuelle et/ou automatiques d'états de repliage de pales (2).

**Claims**

1. Method of setting into coincidence prior to coupling complementary projecting portions (11A) with concave portions (11B), and vice versa, of an upstream member (9) and a downstream member (10), within a non-permanent connection via obstacles which is provided for transmitting rotary motion (B) between said members (9, 10), said method providing an attempted coupling step (12) with an approach stage (13) for the complementary portions (11A, 11B) and an attempt-failure stage (14) if projecting portions (11A) of the member (9) are substantially facing projecting portions (11A) of the other member (10) to be coupled, a step (15) of setting into angular coincidence in the event of a failure stage (14) by performing at least one relative rotation operation (16) between the facing portions (11A), and a step (17) of actual engagement of the motion transmission connection once the complementary portions (11) of the member (9) are substantially in coincidence with those of the other member (10);
   **characterised in that** said method provides for at least the step (15) of setting into coincidence to be automated, and to comprise:

   - in the event of a failure stage (14), a mechanical tension stage (21) which applies tension (C) on the member (9) substantially along the same axis (X) as the approach (D) stage (13), but in the opposite direction;
   - a stage (37) of rotationally mating the member (9) with at least one mechanical angular-guiding element (38) under the effect of the tension stage (21); and
   - a stage (47) of shifting the phase of the upstream member (9) relative to the downstream member (10) under the effect of the tension stage (21), caused by an operation (48-49) of angular guiding of the element (38) mated to the upstream member, against a reference (20) that is stationary in rotation relative to the upstream member (9).

2. Method according to Claim 1,
   **characterised in that** it provides for the approach stage (13) and/or the mechanical tension stage (21) to be obtained at least in part by axial sliding and/or radial sliding and/or reversal about a pivot axis, said approach (D) stage (13) being, for example, performed entirely by axial sliding, so that the stage (21) implements a low-force pushing-in directed axially (X) in the opposite direction to that of the approach (D).

3. Method according to Claim 1 or 2,
   **characterised in that** it provides for the failure stage (14) of the attempted coupling step (12) to be derived from a timeout and/or an operation (34) of limiting the force generated on the upstream member (9) by the approach stage (13) when the force exceeds a predetermined threshold force value, said failure stage (14) causing the activation direction of an approach motor (22) to be reversed, optionally at the end of a predetermined timeout period, for example having a duration of about 5 to 6 seconds, measured from the beginning of the approach stage (13) or of the operation (34) of detecting a force of value greater than the predetermined threshold force value.

4. Method according to Claim 2,
   **characterised in that** the mechanical tension stage (21) is performed by reversing the activation direction of a motor (22) common to the approach stage (13) of the complementary portions in the attempted coupling step, for example so that the approach stage (13) is axial and obtained by an operation (23) of mechanically transforming a pivoting movement derived from the common approach motor (22), said mechanical transformation operation (23) being compatible, optionally simultaneously, with the transmission of rotary motion (B) by the coupling from the upstream member (9) to the downstream member (10).

5. Method according to one of Claims 1 to 4,
   **characterised in that** the tension stage (21) is performed against a mechanical termination force (45) which is intended to be stored during the setting-into-coincidence step (15) and then released during a resetting step (51), for example so that the tension stage (21) is axial and/or the mechanical termination force is stored by an elastic deformation operation such as tensioning a spring (45) or the like.

6. Method according to one of Claims 1 to 4,
   **characterised in that** a mating stage (37) of the setting-into-coincidence step (15) is obtained at least in part by an operation (39) of locally pressing the upstream member (9) against the guiding element (38), for example so that said local pressing operation (39) leads to mutual friction of the upstream member (9) against the element (38) suitable for temporarily preventing them from moving relative to each other (9-10) under the effect of the mechanical tension stage (21) and optionally of a mechanical termination force.

**7.** Method according to Claim 6,
**characterised in that** the angular-guiding operation (39) of the phase-shifting stage (47) is obtained at least in part by relative local sliding of the element (38) against the stationary reference (20).

**8.** Method according to Claim 6 or 7,
**characterised in that** said angular-guiding operation (39) is brought about over an amplitude (Â) of the order of a few degrees, such that:

$$[Â \neq 360/N \times E \times R],$$

and

$$[(90/N) < R < (360/N)]$$

where:

N: is the number of projecting or concave portions to be engaged;
E: is a non-zero integer, for example equal to 1; and
R: is a predetermined angular-guiding factor;

and so that, for example, the guiding amplitude (Â) is of the order of the angular value in degrees corresponding to that covered by substantially one-quarter to one-half of a projecting or concave portion (11A, 11B) to be engaged.

**9.** Method according to one of Claims 6 to 8, **characterised in that** the operation (39) provides an automated resetting step (51), with:

- a stage (52) of mutual locking in rotation of the mechanical angular-guiding element (38) with the stationary reference (20), at least in part subsequent to the phase-shifting stage (47), and in particular subsequent to the angular-guiding operation (48; 49), said locking stage (52) being brought about mechanically by the mechanical tension stage (21), for example by radial interposition in the centrifugal direction of latches (54), then under thrust from the upstream member (9), between the mechanical element (38) and the stationary reference;
- followed by an end-of-stroke operation (50) for the mechanical tension stage, at least in part subsequent to the angular-guiding operation, the tension end-of-stroke operation (50) leading to a new approach (D) stage (13); and
- during said new approach (D) stage (13), distinct operations of interrupting the mating (37) of the upstream member (9) with the guiding element (38), and a stage (53) of interrupting the locking (52) of the guiding element (38) with the stationary reference (20).

**10.** Method according to Claim 9,
**characterised in that** the tension end-of-stroke operation leads to the new approach (D) stage (13) as a result of an operation (36) of detecting a maximum tension position, for example so that said new approach (D) stage (13) is axial (X) and is obtained by an operation (23) of transforming a pivoting movement derived from the common approach motor (22) via a reversible mechanical system (24-31; 33) of complementary obstacles, said transformation system being compatible, optionally simultaneously, with the transmission of rotary motion (B) by the coupling from the upstream member (9) to the downstream member (10).

**11.** Method according to one of Claims 6 to 10,
**characterised in that** the operation (53) of interrupting locking (52) leads initially to release of a mechanical termination force, and under the effect of the mechanical termination force, to a return of the guiding element (38) into the extended abutment position (43) against the reference (20).

**12.** Method according to one of Claims 1 to 11,
**characterised in that** said method provides for at least the setting-into-coincidence step (15) to be repeated until the complementary projecting and concave portions (11A, 11B) have been set into correspondence, after which an actual coupling step (17) is authorised.

13. Method according to one of Claims 1 to 12,
    **characterised in that** said method provides for the upstream member (9) to be a drive member, while the downstream member (10) is a member that is to be driven.

14. Method according to one of Claims 1 to 13,
    **characterised in that**, once an actual coupling step (17) has been authorised, rotary motion (B) begins to be transmitted between the upstream member (9) and the downstream member (10) via the non-permanent connection coupled by obstacles, for example so that said transmission of rotary motion (B) takes place under the effect of a main motor (59) distinct from an approach motor (22) via a reduction gearing stage (63) that acts following an operation of rotary engagement with the upstream member (9) and/or following release of a brake (8) for preventing movement of the downstream member (10) .

15. System (5) of setting into coincidence prior to coupling complementary projecting portions (11A) with concave portions (11B), and vice versa, of an upstream member (9) and a downstream member (10), within a non-permanent connection via obstacles which is provided for transmitting rotary motion (B) between said members (9; 10), said system comprising an attempted coupling assembly (12), with approach means (13) for the complementary portions (11A; 11B) and means (14) for revealing a failure of the attempt if projecting portions (11A) of the upstream member (9) are substantially facing projecting portions (11A) of the downstream member (10), an assembly (15) for setting into angular coincidence connected to the failure-revealing means (14) in order to be able to activate at least one member (48-49) for imparting relative rotation to the facing portions (11) of the upstream member (9) and of the downstream member (10), and an assembly (17) for actually engaging the motion transmission connection and arranged to couple the complementary portions (11) of the upstream member (9) substantially in coincidence with those of the downstream member (10), and vice versa;
    **characterised in that** the setting-into-coincidence assembly (15) is automatic, and comprises:

    - mechanical tension means (21) arranged to apply, in the event of the failure-revealing means (14) being activated, tension on the upstream member substantially along the axis (X) of loading by the approach means (13), but in the opposite direction;
    - means (37) for rotationally mating the upstream member with at least one mechanical angular-guiding element (38), arranged to co-operate with the tension means in order to obtain the mating; and
    - means (47) for shifting the phase of the upstream member relative to the downstream member under the effect of the tension means, with a member (48; 49) for angular guiding of the element (38), said guiding member being suitable for sliding against a reference (20) that is stationary in rotation relative to the downstream member (10) in order to bring about the phase shift.

16. System (5) according to Claim 15,
    **characterised in that** the system (5) is suitable for implementing the method of setting into coincidence according to one of Claims 1 to 14.

17. System (5) according to Claim 15 or 16,
    **characterised in that** said system (5) provides for the approach means (13) of the attempted coupling assembly to be arranged to ensure displacement of the upstream member relative to the downstream member, at least in part by axial sliding and/or radial sliding and/or reversal about a pivot axis.

18. System (5) according to one of Claims 15 to 17,
    **characterised in that** the approach means (13) provide relative displacement of the upstream and downstream members entirely by axial sliding (X) of the upstream member inside a casing (19) to which the stationary reference (20) is rigidly secured, the tension means that provide a low-force pushing-in being arranged to cause the upstream member to slide axially but in the direction opposite to the approach axial sliding direction, said approach means comprising for example at least:

    - an approach motor (22) common to the setting-into-coincidence assembly and the actual-engagement assembly; and
    - a member (23) for mechanically transforming a pivoting movement derived from the common motor into axial sliding of the upstream member, said mechanical transformation member being arranged also to allow the upstream member to transmit rotary motion to the downstream member, optionally simultaneously.

**19.** System (5) according to Claim 18,
**characterised in that** said mechanical transformation member (23) comprises at least:

- a primary shaft (24) functionally connected at its input to the approach motor (22) and having an output worm (25);
- an intermediate angle transmission and/or reduction gearing assembly, for example having an intermediate shaft (26) with a driving toothed ring (27) engaged with the output worm (25) of the primary shaft (24), and also an output intermediate worm (28), and an output shaft (29) for guiding in rotation an intermediate toothed sector (30) having an input co-operating with the intermediate worm (28), the output shaft (29) guiding in rotation an offset toothed sector (31); and
- a transmission bar (32) of the upstream member (9), provided with axially spaced-apart peripheral shoulders (33) disposed to be suitable for meshing with the offset toothed sector (31) of the intermediate assembly, so that rotation within said intermediate assembly causes the upstream member to slide axially by applying thrust to the peripheral shoulders (33).

**20.** System (5) according to one of Claims 15 to 19,
**characterised in that** the failure-revealing means are controlled by a timeout and/or a force-limiting member (34).

**21.** System (5) according to one of Claims 15 to 20,
**characterised in that** the mating means (37) of the setting-into-coincidence assembly (15) comprise at least a member (39) for locally pressing the upstream member (9) against the guiding element (38), for example a frustoconical plate (40) having biting grooves (41) projecting radially from a transmission bar (32) of the upstream member (9), are arranged to be suitable for being pressed (39) axially against a frustoconical cavity (42) of the element (38), said cavity (42) of shape substantially complementary to the shape of the plate (40) defining a front abutment (43) designed to be acted upon by the tension means (21), and are optionally coated in soft or ductile material (44) such as aluminium.

**22.** System (5) according to Claim 21,
**characterised in that** the cavity (42) is arranged to act against the action of a member (45) for producing a mechanical termination force that is to be released during resetting (51), for example so that said member (45) produces elastic deformation by tensioning, and is in the form of a spring or the like, and so that the producing member (45) is typically mounted axially between a rear abutment (43) of the element (38) and a front abutment (46) of the stationary reference (20) such as a plate with decoupling needles.

**23.** System (5) according to one of Claims 15 to 22,
**characterised in that** the angular-guiding element (38) of the phase-shifting means (47) comprises at least one member (48; 49) forming a local slideway, arranged to co-operate with at least one member (50) forming a guiding feeler of the stationary reference (20), for example the slideway-forming member (48; 49) comprises at least one pair of sloping oblong slots (49) facing each other diagonally, while the feeler-forming member (50) possesses at least one transverse finger projecting radially into each slot (49) of the pair of slots.

**24.** System (5) according to Claim 23,
**characterised in that** the upstream member (9) possesses thirty-two projecting portions (11A) such as grooves or the like, each oblong slot (49) of the angular-guiding element (38) being inclined at a guiding amplitude (Â) of the order of 0.5˚ to 10˚, in particular lying in the range 0.5˚ to 5˚, e.g. substantially 1.5˚ to 2.5˚.

**25.** System (5) according to one of Claims 15 to 24,
**characterised in that** the phase-shifting means (37) possess an angular-guiding member (48) disposed to be capable of causing a phase shift over a guiding amplitude (Â) substantially such that:

$$[\hat{A} \neq 360/N \times E \times R],$$

and

$$[(90/N) < R < (360/N)]$$

where:

N: is the number of projecting or concave portions to be engaged;
E: is a non-zero integer, e.g. equal to 1; and
R: is a predetermined angular-guiding factor;

and so that, for example, the guiding amplitude (Â) is of the order of the angular value in degrees corresponding to that covered by substantially one-quarter to one-half of a projecting or concave portion (11A, 11B) to be engaged.

26. System (5) according to one of Claims 15 to 25,
**characterised in that** said system (5) includes an automated resetting assembly (51), with at least:

- means (52) for mutually locking in rotation of the mechanical angular-guiding element with the stationary reference;
- an end-of-stroke detector member (36) in common with the mechanical tension means and arranged to activate the approach means;
- means (37) for interrupting the mating of the upstream member with the guiding element; and
- means (53) for interrupting the locking (52) of the guiding element in rotation with the stationary reference.

27. System (5) according to Claim 26,
**characterised in that** the mutual locking means (52) of the automated resetting assembly are functionally connected to the mechanical tension means to bring about locking mechanically by radial interposition in the centrifugal direction of retractable latch-forming rollers (54), for example so that the mutual locking means comprise at least three retractable rollers (54) mounted to move at angular intervals that are regularly distributed around the circumference of a peripheral recess (55) of the mechanical guiding element, and also for each retractable roller (54) a radial pusher (56), in particular in the form of a ball.

28. System (5) according to Claim 27,
**characterised in that** each radial pusher (56) is slidably mounted in a radial hole in the guiding element (38) and is suitable for being pushed (E) radially outwards by a rear endpiece lip (57) of the upstream member so as to be moved radially outwards, the corresponding retractable roller (54) thus being movable between:

- a locking position in which it is both in the peripheral recess (55) and engaged with the reference (20); and
- a position in which the element (38) is free to pivot relative to the reference (20), in which the roller (54) is outside the recess (55) and pressed against an inside wall (58) of the reference (20) by its corresponding radial pusher (56).

29. System (5) according to one of Claims 15 to 28,
**characterised in that** said system (5) provides for the upstream member (9) to be a drive member, while the downstream member (10) is a member to be driven, said upstream member having, at a free coupling end (60), projecting and concave portions (11A, 11B) in the form of grooves with chamfered front ends (61), for example so that the upstream member (9) defines a transmission bar (32) continuously loaded in a rearwards direction close to its free coupling end by means (62) for taking up axial clearance.

30. System (5) according to one of Claims 15 to 29,
**characterised in that** said system (5) includes a main motor (59) suitable for driving the downstream member in rotation via reduction gearing decoupling means (63) such as an epicyclic gear train (64), said decoupling means (63) being functionally connected at its input to an output component (65) of an asynchronous electric motor.

31. Method of providing rotary drive (B) via an upstream member (9) coupled to a downstream member (10), implementing the method according to one of Claims 1 to 14 and/or employing the system of setting into coincidence according to one of Claims 15 to 30;
**characterised in that** said method enables automatic indexing of the azimuth position of blades (2) of a rotary wing aircraft (1), in which:

- a brake (8) suitable for preventing a blade-supporting rotor (3) from moving is applied during the setting-into-coincidence step (15), and possibly during the attempted coupling and actual engagement steps; and
- said brake (8) is released following the actual engagement step (17) during transmission of rotary motion (B) from the upstream member to the downstream member, said members being functionally secured to a main transmission gearbox (4) of the aircraft (1).

**32.** Method according to Claim 31,
**characterised in that** it provides the following in succession:

- a state of requesting release of the brake (8) followed by confirmation thereof, both prior to transmitting rotary motion from the upstream member to the downstream member;
- the step of transmitting rotary motion from the upstream member to the downstream member until the blades (2) have been put into a predetermined azimuth position by rotation of the rotor (3); and
- a state of requesting application of the brake (8), followed by confirmation thereof.

**33.** Method according to Claim 32,
**characterised in that** these states of requesting application/release of the brake (8), and the confirmations thereof, are performed manually, at least in part, for example as a function of information, in particular visual information, provided by a control panel (66) and suitable for being acknowledged by a controller (67) that is dedicated, as is the panel (66).

**34.** Method according to Claim 32 or 33,
**characterised in that** said states of requesting application/release of the brake (8), and the confirmations thereof, are performed automatically, at least in part, for example with a duplicated network (69) of information of requests and confirmations in order to avoid any risk of the rotor being braked while the aircraft is in flight.

**35.** Device (6) for providing rotary drive via an upstream member (9) coupled to a downstream member (10), employing the system of setting into coincidence according to one of Claims 15 to 30,
**characterised in that** said device (6) is arranged to provide automatic indexing of the azimuth position of the blades (2) of a rotary wing aircraft (1), said device (6) being automatic and comprising at least:

- a brake (8) suitable for preventing a blade-supporting rotor (3) from moving, for example an electric type brake;
- a panel (66) for displaying control states, information and confirmations of automatic indexing;
- a dedicated controller (67) for automatic indexing states; and
- a duplicated network (69) of the information of requests and confirmations of control state steps, of information and of confirmations of automatic indexing.

**36.** Rotary wing aircraft such as a helicopter, employing the system of setting into coincidence according to one of Claims 15 to 30 and/or including a device (6) according to Claim 35;
**characterised in that** said aircraft (1) includes a main transmission gearbox (4) with a connector for coupling to an automated system (5) of setting into coincidence, a brake (8) suitable for preventing movement of a rotor (3) for supporting main blades (2), for example an electric type brake, and within a cockpit (68), manual and/or automatic means (70) for controlling folding states of blades (2).

**Patentansprüche**

**1.** Verfahren zum Ausrichten von vorstehenden Bereichen (11A) mit komplementären konkaven Bereichen (11B) und umgekehrt vor dem Kuppeln eines eingangsseitig gelegenen Organs (9) und eines ausgangsseitig gelegenen Organs (10) während einer nicht permanenten Verbindung durch Hemmung, die zur Übertragung einer Rotationsbewegung (B) zwischen den Organen (9, 10) vorgesehen ist, wobei dieses Verfahren einen Schritt (12) eines Kuppelversuchs vorsieht mit einer Annäherungsphase der komplementären Bereiche (11A, 11B) und einer Fehlschlagsphase (14), des Versuchs, wenn die vorstehenden Bereiche (11A) des Organs (9) den vorstehenden Bereichen (11A) des anderen Organs (10), welches zu kuppeln ist, im Wesentlichen gegenüber stehen, sowie einen Schritt (15) der winkelmäßigen Ausrichtung im Falle eines Fehlschlags in der Fehlschlagsphase (14) durch mindestens eine Drehbewegungsoperation (16) der sich gegenüberliegenden Bereiche (11A) und einen Schritt (17) des effektiven Eingriffs der Bewegungsübertragungsverbindung, wenn die komplementären Bereiche des Organs (9) im Wesentlichen mit denen des anderen Organs (10) fluchten,
**dadurch gekennzeichnet, dass** das Verfahren vorsieht, dass mindestens der Schritt (15) der Ausrichtung automatisiert ist und aufweist:

- eine Phase (21) mechanischer Spannung, wenn die Fehlschlagphase (14) eintritt, bei der eine Spannung (C) des Organs (9) im Wesentlichen längs der Richtung (X) der Phase (13) der Annäherung (D), aber in entgegengesetzter Richtung ausgeübt wird;
- eine Phase des winkelmäßigen gegeneinander Ausrichtens des Organs (9) mit mindestens einem mechanischen Winkelführungselement (38) unter Wirkung der Phase (21) der mechanischen Spannung; und
- eine Phase (47) der Phasenverschiebung bzw. Winkelverschiebung des eingangsseitigen Organs (9) relativ zum ausgangsseitigen Organ (10) unter der Wirkung der Phase der mechanischen Spannung, hervorgerufen durch eine Winkelführungsoperation (48, 49) des Elements (38), welches gegenüber dem eingangsseitigen Organs ausgerichtet ist, gegenüber einem bezüglich dem eingangsseitigen Organ (9) drehfesten Bezugssystem (20).

2. Verfahren nach Anspruch 1,
**dadurch gekennzeichnet, dass** es vorsieht, dass die Näherungsphase (13) und/oder die Phase (21) der mechanischen Spannung zumindest teilweise durch axiales Gleiten und/oder radiales Gleiten und/oder einer Umkehrbewegung um eine Schwenkachse erhalten wird, wobei diese Phase (13) der Näherung (D) beispielsweise vollständig durch axiales Gleiten realisiert wird, derart, dass die Phase (21) einen Durchhub mit begrenzter Kraft axial (X) in umgekehrter Richtung zu der Näherungsrichtung (D) durchführt.

3. Verfahren nach Anspruch 1 oder 2,
**dadurch gekennzeichnet, dass** es vorsieht, dass die Phase (14) des Fehlschlags des Schrittes (12) des Versuchs eines Kuppelns aus einer Verzögerung und/oder einer Operation (34) der Begrenzung der Kraft hervorgeht, die durch die Näherungsphase (13) auf das eingangsseitige Organ (9) ausgeübt wird mit einer Größe, die über einen vorbestimmten Kraftschwellenwert liegt, wobei die Fehlschlagsphase (14) eine Umkehrung der Betätigungsrichtung eines Näherungsantriebs (22) bewirkt, gegebenenfalls hervorgerufen durch eine vorbestimmte Verzögerungsphase, die beispielsweise eine Länge von 5 s bis 6 s hat, ab dem Beginn der Näherungsphase (13) oder der Erfassung (34) eines Kraftwertes, der größer ist als der vorbestimmte Schwellenkraftwert.

4. Verfahren nach Anspruch 2,
**dadurch gekennzeichnet, dass** die Phase (21) der mechanischen Spannung durchgeführt wird durch Umkehrung der Betätigungsrichtung eines gemeinsamen Antriebs (22) mit der Phase (13) der Annäherung der komplementären Bereiche des Schritts des Versuchs eines Kuppelns, beispielsweise derart, dass die Näherungsphase (13) axial ist und erhalten wird durch eine mechanische Transformation einer Schwenkbewegung, die hervorgerufen wird durch den gemeinsamen Antrieb (22) der Annäherung, wobei die mechanische Transformation (23) gegebenenfalls gleichzeitig kompatibel ist mit der Drehbewegung (B), die durch das Kuppeln des eingangsseitigen Organs (9) mit dem ausgangsseitigen Organ (10) zu übertragen ist.

5. Verfahren nach einem der Ansprüche 1 bis 4,
**dadurch gekennzeichnet, dass** die Spannungsphase (21) gegen eine mechanische Ruhekraft (45) durchgeführt wird, die während des Ausrichtungsschritts (15) gesammelt wird und während eines Rückstellungsschrittes (51) freigesetzt wird, zum Beispiel derart, dass die Spannungsphase (21) axial ist und/oder die mechanische Ruhekraft gesammelt wird durch eine elastische Deformation, wie beispielsweise das Biegen einer Feder (45) oder dergleichen.

6. Verfahren nach einem der Ansprüche 1 bis 4,
**dadurch gekennzeichnet, dass** eine Phase (37) des Gegeneinanderausrichtens des Schritts (15) der Ausrichtung mindestens zum Teil erhalten wird durch ein lokales Andrücken (39) des eingangsseitigen Organs (9) gegen das Führungselement (38), zum Beispiel derart, dass dieses lokale Andrücken ein gegenseitiges Reiben des eingangsseitigen Organs (9) gegen das Element (38) bewirkt und dazu führt, dass diese zeitweise gegeneinander (9-10) unter der Einwirkung der Phase (21) der mechanischen Spannung und gegebenenfalls einer mechanischen Ruhekraft, immobilisiert sind.

7. Verfahren nach Anspruch 6,
**dadurch gekennzeichnet, dass** die Winkelführung (39) der Phase (47) der Winkelverschiebung mindestens zum Teil erhalten wird durch ein lokales Gleiten des Elements (38) bezüglich des statischen Bezugssystems (20).

8. Verfahren nach Anspruch 6 oder 7,
**dadurch gekennzeichnet, dass** die Winkelführung (39) mit einer Amplitude (A) der Größenordnung von einigen Grad erfolgt, derart, dass

$$[\mathring{A} \neq 360 / N \times E \times R],$$

und

$$[(90 / N) < R < (360 / N)],$$

wobei bedeutet:
N: die Anzahl der vorstehenden oder konkaven Eingriffsbereiche;
E: eine ganze Zahl oder Null, zum Beispiel 1; und
R: einen vorbestimmten Winkelführungsfäktor;
derart, dass zum Beispiel die Führungsamplitude (A) die Größenordnung des Winkelwertes in Grad hat, der dem Wert entspricht, der im Wesentlichen einem Viertel bis die Hälfte des vorstehenden (11A) oder konkaven (11B) Bereichs entspricht, die zum Eingriff ineinandergebracht werden sollen.

9. Verfahren nach einem der Ansprüche 6 bis 8,
**dadurch gekennzeichnet, dass** die Operation (39) einen Schritt (51) einer automatisierten Rückstellung umfasst, mit:

- einer Phase (52) der gegenseitigen Verriegelung hinsichtlich einer Rotationsbewegung des mechanischen Winkelführungselements (38) mit dem statischen Bezugssystem (20), wobei mindestens teilweise nach der Phasenverschiebung (47) und bei der Winkelführung (48, 49) diese Verriegelungsphase (52) mechanisch durch die Phase (21) der mechanischen Spannung hervorgerufen wird, zum Beispiel durch radiales Eingreifen in Zentrifugalrichtung von Riegeln (54), die durch das eingangsseitige Organ (9) geschoben werden, zwischen das mechanische Element (38) und das statische Bezugssystem;
- eine Betätigung (50), bei der die Phase der mechanischen Spannung zu einem Ende kommt, mindestens teilweise später als die Winkelführung, wobei die Operation (50) der Beendigung der Spannung eine neue Phase (13) der Annäherung (D) hervorruft; und
- während dieser neuen Phase (13) der Annäherung (D) getrennte Operationen der Beendigung einer Ausrichtung (37) des eingangsseitigen Organs (9) gegenüber dem Führungselement (38) erfolgen und eine Phase (53) der Beendigung der Verriegelung (52) des Führungselements mit dem statischen Bezugssystem (20) erfolgt.

10. Verfahren nach Anspruch 9,
**dadurch gekennzeichnet, dass** die Operation der Beendigung des Anlegens einer Spannung die neue Phase (13) der Annäherung (D) bewirkt infolge auf eine Erfassung (36) einer Maximallage der Spannung, zum Beispiel derart, dass diese neue Phase (13) der Annäherung (D) axial (X) ist und erhalten wird durch eine Transformation einer Schwenkbewegung hervorgerufen durch den gemeinsamen Antrieb (22) der Annäherung, über eine reversible mechanische Kette (24 bis 31; 33) mit komplementären Hemmungen, wobei diese Transformationskette gegebenenfalls gleichzeitig kompatibel mit der durch das Kuppeln des eingangsseitigen Organs (9) mit dem ausgangsseitigen Organ (10) zu übertragenden Drehbewegung ist.

11. Verfahren nach einem der Ansprüche 6 bis 10,
**dadurch gekennzeichnet, dass** das Beenden (53) der Verriegelung (52) zuerst das Freisetzen einer mechanischen Ruhekraft bewirkt, und durch die mechanische Ruhekraft eine Rückstellung in eine entfernte Anschlagsposition (34) des Führungselements (38) gegen das Bezugssystem (20) erfolgt.

12. Verfahren nach einem der Ansprüche 1 bis 11,
**dadurch gekennzeichnet, dass** das Verfahren vorsieht, dass mindestens der Ausrichtungsschritt wiederholt wird bis die komplementären vorstehenden Bereiche (11A) und konkaven Bereiche (11B) zueinander passen, woraufhin ein Schritt (17) der effektiven Kupplung autorisiert wird.

13. Verfahren nach einem der Ansprüche 1 bis 12,
**dadurch gekennzeichnet, dass** das Verfahren vorsieht, dass das eingangsseitige Organ (9) ein Antriebsorgan ist, während das ausgangsseitige Organ ein anzutreibendes Organ ist.

14. Verfahren nach einem der Ansprüche 1 bis 13,
**dadurch gekennzeichnet, dass** wenn ein Schritt (17) des effektiven Kuppelns autorisiert ist über die nicht permanente Verbindung durch Kupplung über Hemmungen die Übertragung einer Drehbewegung (B) zwischen dem eingangsseitigen Organ (9) und dem ausgangsseitigen Organ (10) beginnt, zum Beispiel derart, dass diese Drehbewegungsübertragung (B) durch einen getrennten Hauptantrieb (59) eines Antriebs (22) der Annäherung erfolgt, über eine Phase (63) der Reduktion, die am Ausgang eines Dreheingriffs mit dem eingangsseitigen Organ (9) und/ oder in Folge eines Lösens einer Blockierbremse (8) des ausgangsseitigen Organs (10) erfolgt.

15. System (5) zum Ausrichten von vorstehenden Bereichen (11A) mit komplementären konkaven Bereichen und umgekehrt vor dem Kuppeln eines eingangsseitig gelegenen Organs (9) und eines ausgangsseitig gelegenen Organs (10) während einer nicht permanenten Verbindung durch Hemmung, die zur Übertragung einer Rotationsbewegung (B) zwischen diesen Organen (9; 10) vorgesehen ist, wobei dieses System eine Anordnung (12) zur Durchführung eines Kuppelversuchs aufweist mit Mitteln (13) zum Annähern der komplementären Bereiche (11A; 11b) und ein Mittel (14) zum Erfassen eines Fehlschlags des Versuchs, wenn die vorstehenden Bereiche (11A) des eingangsseitigen Organs (9) im Wesentlichen gegenüber den vorstehenden Bereichen (11A) des ausgangsseitigen Organs (10) liegen, wobei eine Anordnung (15) zur winkelmäßigen Ausrichtung vorgesehen ist, welches mit den Mitteln (14) zum Erfassen eines Fehlschlags verbunden sind, um die Aktivierung mindestens eines Drehorgans (48, 49) zu bewirken, wobei die Drehung der sich gegenüberliegenden Bereiche (11) des eingangsseitigen Organs (9) und des ausgangsseitigen Organs (10) erfolgt und eine Anordnung (17) zum effektiven Eingriff der Bewegungsübertragungsverbindung angeordnet ist, um das Kuppeln der komplementären Bereiche (11) des eingangsseitigen Organs (9) zu bewirken, welches im Wesentlichen gegenüber dem ausgangsseitigen Organ (10) ausgerichtet ist, und umgekehrt,
**dadurch gekennzeichnet, dass** die Anordnung (15) zur Ausrichtung automatisch funktioniert und aufweist:

- ein Mittel (21) zum Erzeugen einer mechanischen Spannung, welches angeordnet ist, um im Fall der Betätigung des Mittels (14) zum Erfassen eines Fehlschlags eine Spannung an das eingangsseitige Organ anzulegen, im Wesentlichen entlang der Beaufschlagungsrichtung (X) durch das Mittel (13) zur Annäherung, jedoch in entgegensetzter Richtung;
- ein Mittel (37) zum Gegeneinanderausrichten in Drehrichtung des eingangsseitigen Organs mit mindestens einem mechanischen winkelfiihrungselement, welches angeordnet ist, um mit den Mitteln zur Erzeugung einer Spannung zusammenzuwirken, um eine Ausrichtung zu erzielen;
- einem Mittel (47) zur Phasenverschiebung bzw. Winkelverschiebung des eingangsseitigen Organs im Verhältnis zu dem ausgangsseitigen Organ durch Einwirkung des Mittels zur Erzeugung der Spannung mit einem Winkelfiihrungsorgan (48, 49) des Elements (38), wobei dieses Führungsorgan gegen ein statisches Bezugssystem (20) relativ zum ausgangsseitigen Organ (10) drehgleiten kann, um die Phasenverschiebung zu bewirken.

16. System (5) nach Anspruch 15,
**dadurch gekennzeichnet, dass** es das Verfahren zur Ausrichtung gemäß einem der Ansprüche 1 bis 14 ausführen kann.

17. System (5) nach Anspruch 15 oder 16,
**dadurch gekennzeichnet, dass** vorgesehen ist, dass das Mittel (13) zur Annäherung der Anordnung zum Versuch einer Kupplung vorgesehen ist, um eine Bewegung des eingangsseitigen Organs relativ zum ausgangsseitigen Organ mindestens teilweise durch axiales und/oder radiales Gleiten und/oder durch Umkehrung um eine Schwenkachse sicherzustellen.

18. System (5) nach einem der Ansprüche 15 bis 17,
**dadurch gekennzeichnet, dass** das Mittel (13) zur Annäherung eine Relativverschiebung der eingangsseitigen und ausgangsseitigen Organe sicherstellt, und zwar vollständig durch ein axiales Gleiten (X) des eingangsseitigen Organs im Inneren eines Gehäuses (19) mit dem das statische Bezugssystem (20) starr verbunden ist, wobei das Mittel zur Erzeugung einer Spannung, welches eines Durchhub mit begrenzter Kraft sicherstellt vorgesehen ist, um ein axiales Gleiten des eingangsseitigen Organs in umgekehrter Richtung bezüglich der Richtung des axialen Gleitens bei der Annäherung zu bewirken, wobei das Mittel zur Annäherung mindestens zum Beispiel aufweist:

- einen Näherungsantrieb (22), der den Anordnungen zur Ausrichtung und zum effektiven Eingriff gemeinsam ist; und
- ein mechanisches Übertragungsorgan einer Schwenkbewegung, die aus dem gemeinsamen axialen Gleitantrieb des eingangsseitigen Organs hervorgeht, wobei dieses mechanische Übertragungsorgan angeordnet ist, um ebenfalls, gegebenenfalls gleichzeitig, die Drehbewegung des eingangsseitigen Organs zum ausgangsseitigen Organ zu erlauben.

**19.** System (5) nach Anspruch 18,
**dadurch gekennzeichnet, dass** das mechanische Übertragungsorgan (23) mindestens aufweist:

- eine Hauptwelle (24), die funktionell mit dem Eingang eines Näherungsantriebs (22) verbunden ist mit einer Ausgangsendlosschraube (25);
- eine Zwischenanordnung zur Winkelrückstellung und/oder Untersetzung, beispielsweise mit einer Zwischenachse (26) mit einer gezahnten Antriebskrone (27) in Eingriff mit der Ausgangsendlosschraube (25) der Hauptwelle (24) sowie mit einer Ausgangszwischenendlosschraube (28) und einer Führungsausgangswelle (29) zur Rotationsführung eines Zwischensektors (30) mit Zähnen, der am Eingang mit der Zwischenendlosschraube (28) zusammenwirkt, wobei die Ausgangswelle (29) die Drehbewegung eines Sektors (31) mit versetzten Zähnen führt; und
- eine Übertragungsstange (32) des eingangsseitigen Organs (9), die mit axial beabstandeten peripheren Schultern (33) versehen ist und angeordnet ist, um in den Sektor (31) mit versetzten Zähnen der Zwischenanordnung eingreifen kann, derart, dass eine Drehung der Zwischenanordnung ein axiales Gleiten des eingangsseitigen Organs durch Druck auf die peripheren Schultern (33) bewirkt.

**20.** System (5) nach einem der Ansprüche 15 bis 20,
**dadurch gekennzeichnet, dass** das Mittel zum Erfassen eines Fehlschlags von einer Verzögerung und/oder einem Organ (34) zur Kraftbegrenzung gesteuert wird.

**21.** System (5) nach einem der Ansprüche 15 bis 19,
**dadurch gekennzeichnet, dass** das Mittel (37) zur Gegeneinanderausrichtung der Anordnung (15) zur Ausrichtung mindestens ein Organ (39) zum lokalen Andrücken des eingangsseitigen Organs (9) gegen das Führungselement (38) aufweist, beispielsweise einen kegelstumpfförmigen überstehenden Flansch (40) mit Nuten, der gegenüber einer Übertragungsstange (32) des eingangsseitigen Organs (9) radial vorsteht und angeordnet ist, um einen axialen Andruck (39) gegen eine kegelstumpfförmige Aushöhlung (42) des Elements (38) auszuüben, wobei diese Ausnehmung (42) mit einer im Wesentlichen komplementären Form zu der des Flansches (40) einen vorderen Anschlag (43) definiert, der vorgesehen ist, um von dem Mittel (21) zur Druckerzeugung beaufschlagt zu werden und der gegebenenfalls mit einem weichen oder duktilen Material, wie zum Beispiel Aluminium, verkleidet ist.

**22.** System (5) nach Anspruch 21,
**dadurch gekennzeichnet, dass** die Ausnehmung (42) angeordnet ist, um gegen die Wirkung eines Organs (45), welches eine mechanische Ruhekraft erzeugt, zu wirken, um während einer Rückstellung (51) diese Ruhekraft freizusetzen, zum Beispiel derart, dass dieses Organ (45) eine elastische Biegeverformung erzeugt und die Form einer Feder oder Ähnlichem hat und derart, dass typischerweise das mechanische krafterzeugende Organ (45) axial zwischen einem hinteren Anschlag (43) des Elements (38) und einem vorderen Anschlag (46) des statischen Bezugssystems (20) wie einer Nadelplatte zum Entkuppeln angeordnet ist.

**23.** System (5) nach einem der Ansprüche 15 bis 22,
**dadurch gekennzeichnet, dass** das Winkelführungselement (38) des Phasenverschiebungsmittels (47) mindestens ein Organ (48, 49) aufweist, welches eine lokale Gleitschiene bildet, die angeordnet ist, um mit mindestens einem Organ (50) zusammenzuwirken, welches eines Führungsfühler des Bezugssystems (20) bildet, wobei zum Beispiel das die Gleitschiene bildende Organ (48, 49) mindestens ein paar geneigte Langlöcher (49), die sich diagonal gegenüberliegen aufweist, wohingegen das Organ (50), welches den Fühler bildet mindestens einen Finger aufweist, der das Innere eines jeden Lochs (49) des Paares der Löcher durchquert und radial vorsteht.

**24.** System (5) nach Anspruch 23,
**dadurch gekennzeichnet, dass** das eingangsseitige Organ (9) zweiunddreißig vorstehende Bereiche (11A) wie beispielsweise Zahnrifflungen oder dergleichen aufweist, wobei jedes Langloch (49) des Winkelführungselements (38) mit einer Führungsamplitude (A) um 0,5 ˚ bis 10 ˚ geneigt ist, insbesondere um 0,5 ˚, beispielsweise im Wesentlichen 1,5 ˚ bis 2,5 ˚.

25. System (5) nach einem der Ansprüche 15 bis 24,
**dadurch gekennzeichnet, dass** das Phasenverschiebungsmittel (37) ein Winkelführungsorgan (48) aufweist, das angeordnet ist, um eine Phasenverschiebung einer Führungsamplitude (A) zu bewirken, im Wesentlichen derart, dass:

$$[\text{Å} \neq 360 / N \times E \times R],$$

und

$$[(90 / N) < R < (360 / N)],$$

wobei bedeutet:
N: die Anzahl der vorstehenden oder konkaven Eingriffsbereiche;
E: eine ganze Zahl oder Null, zum Beispiel 1; und
R: einen vorbestimmten Winkelfiihrungsfaktor;
derart, dass zum Beispiel die Führungsamplitude (A) die Größenordnung des Winkelwertes in Grad hat, der dem Wert entspricht, der im Wesentlichen einem Viertel bis die Hälfte des vorstehenden (11A) oder konkaven (11B) Bereichs entspricht, die zum Eingriff ineinandergebracht werden sollen.

26. System (5) nach einem der Ansprüche 15 bis 25,
**dadurch gekennzeichnet, dass** das System (5) eine Anordnung (51) zur automatisierten Rückstellung aufweist, mit mindestens:

- einem Drehverriegelungsmittel (52) des mechanischen Winkelführungselements mit dem statischen Bezugssystem;
- einem Organ (36) zur Erfassung des Endes einer Bewegung, welches die Mittel zur Erzeugung einer mechanischen Spannung gemeinsam ist und angeordnet ist, um die Betätigung des Näherungsmittels zu bewirken;
- Mitteln (37) zur Beendigung des Gegeneinanderausrichtens des eingangsseitigen Organs mit dem Führungselement; und
- Mitteln (53) zur Beendigung der Verriegelung (52) des Führungselements mit dem statischen Bezugssystem.

27. System (5) nach Anspruch 26,
**dadurch gekennzeichnet, dass** das Mittel (52) zum gegenseitigen Verriegeln der automatisierten Rückstellanordnung funktionell mit dem Mittel zur Erzeugung einer mechanischen Spannung verbunden ist, um mechanisch die Verriegelung durch radiales Zwischenschieben in Zentrifugalrichtung von Rollen (54), die lösbare Verriegelungen bilden, zum Beispiel derart, dass die gegenseitigen Verriegelungsmittel mindestens drei lösbare Rollen (54) aufweisen, die beweglich mit gleichen Winkelabständen auf dem Umfang einer peripheren Ausnehmung (55) des mechanischen Führungselements verteilt sind, sowie mit einem radialen Schieber (56) insbesondere in Kugelform für jede lösbare rolle (54).

28. System (5) nach Anspruch 27,
**dadurch gekennzeichnet, dass** jeder radiale Schieber (56) gleitend in einer radialen Bohrung des Führungselements (38) angeordnet ist und radial durch einen Spalt (57) der hinteren Abdeckung des eingangsseitigen Organs gestoßen werden kann, um die entsprechende lösbare Rolle (54) radial nach außen zu verschieben, welche somit beweglich gemacht wird zwischen:

- einer Verriegelungsstellung wo sie gleichzeitig in der peripheren Ausnehmung (55) und im Eingriff mit dem Bezugssystem (20) ist; und
- einer Position des relativen Verschwenkens des Elements (38) und des Bezugssystems (20), wo sie (54) sich außerhalb der Ausnehmung (55) befindet und gegen eine Innenwand (58) des Bezugsystems (20) durch ihren entsprechenden radialen Schieber (56) angedrückt wird.

29. System (5) nach einem der Ansprüche 15 bis 28,
**dadurch gekennzeichnet, dass** das System vorsieht, dass das eingangsseitige Organ (9) ein Antriebsorgan ist, während das ausgangsseitige Organ (10) ein anzutreibendes Organ ist, wobei dieses eingangseitige Organ an einem freien Koppelende (60) vorstehende Bereiche (11A) und konkave Bereiche (11B) in Form von Zahnriffelungen mit abgeschrägten vorderen Enden (61) aufweist, zum Beispiel derart, dass das eingangsseitige Organ (9) eine Transmissionsstange (32) definiert, die ständig in der Nähe ihres freien Kuppelendes von einem Mittel (62) zum Aufnehmen des axialen Spiels von vorne bis hinten beaufschlagt ist.

30. System (5) nach einem der Ansprüche 15 bis 29,
**dadurch gekennzeichnet, dass** das System (5) einen Hauptantrieb (59) aufweist, mit dem ausgangsseitige Organ gedreht werden kann, über ein Reduktionsauskuppelmittel (63), wie beispielsweise einem Planetengetriebe, wobei diese Auskuppelmittel (63) funktionell am Eingang mit einem Bestandteil (65) am Ausgang eines elektrischen Asynchronmotors verbunden ist.

31. Drehantriebsverfahren (B) mittels eines eingangsseitigen Organs (9) welches an ein ausgangsseitiges Organ (10) gekoppelt ist, welches das Verfahren gemäß einem der Ansprüche 1 bis 14 ausführt und/oder welches das System zur Ausrichtung gemäß einem der Ansprüche 15 bis 30 verwendet,
**dadurch gekennzeichnet, dass** dieses Verfahren es ermöglicht eine automatische Indizierung der des Azimuts von Blättern (2) eines Drehflügelflugzeugs (1) mit sich drehenden Flügeln sicherstellen kann, wobei:

- eine Bremse (8), die einen Trägerrotor (3) der Blätter während des Ausrichtschritts (15) angezogen ist, das heißt während der Schritte des Kuppelversuchs und des effektiven Eingriffs; und
- diese Bremse nach einem Schritt (17) des effektiven Eingriffs gelöst wird, während der Übertragung der Drehbewegung (B) vom eingangsseitigen Organ zum ausgangsseitigen Organ, wobei die Organe funktionell mit einem Haupttransmissionsgehäuse des Drehflügelflugzeugs verbunden sind.

32. Verfahren nach Anspruch 31,
**dadurch gekennzeichnet, dass** es aufeinanderfolgend vorsieht:

- einen Zustand des Orderns des Lösens der Bremse (8), gefolgt von seiner Durchführung, vor der Übertragung der Drehbewegung vom eingangsseitigen Organ zum ausgangsseitigen Organ;
- den Schritt der Übertragung der Drehbewegung vom eingangsseitigen Organ zum ausgangsseitigen Organ bis die Blätter durch Drehung des Rotors (3) in einen vorbestimmten Azimut gebracht werden; und
- einem Zustand des Ordern des Feststellens der Bremse (8), gefolgt von seiner Durchführung.

33. Verfahren nach Anspruch 32
**dadurch gekennzeichnet, dass** die Zustände der Order des Feststellens/Lösens der Bremse (8) sowie deren Durchführung mindestens teilweise manuell durchgefiihrt werden, zum Beispiel in Abhängigkeit von insbesondere visuellen Informationen, die von einem Steuerpult (60) geliefert werden und über einen entsprechenden Kontrolleur akquitiert werden kann.

34. Verfahren nach Anspruch 32 oder 33,
**dadurch gekennzeichnet, dass** die Zustände der Order des Anziehens/Lösens der Bremse (8) sowie ihre Durchführung mindestens teilweise automatisch durchgefiihrt werden, zum Beispiel mit einem Verschnitt der Schaltkreise der Order und der Durchführung, um jedes Risiko des Bremsen des Rotors während des Flugs des Luftfahrzeugs zu verhindern.

35. Vorrichtung (6) zum Antrieb einer Drehbewegung mittels eines eingangsseitigen Organs (9), welches an ein ausgangsseitiges Organ (10) gekoppelt ist, die das System zum Ausrichten nach einem der Ansprüche 15 bis 30 verwendet, **dadurch gekennzeichnet, dass** die Vorrichtung (6) angeordnet ist, um eine automatische Azimutindizierung der Blätter (2) eines Luftfahrzeugs (1) mit Drehflügeln sicherzustellen, wobei die Vorrichtung (6) automatisch funktioniert und mindestens aufweist:

- eine Bremse (8), mit der ein Trägerrotor (3) der Blätter festgestellt werden kann, beispielsweise eine elektrische Bremse;
- eine Tafel (66) zur Anzeige der Orderzustände von Informationen und der Durchführung der automatischen Indizierung;
- ein Kontrolleur (67) zur Kontrolle der automatischen Indizierung; und
- einem Schaltkreis (69) zum Verschneiden der Informationen und Order und Durchführung der Schritte der Orderzustände, der Informationen und der Durchführung der automatischen Indizierung.

36. Drehflügelflugzeug, wie beispielsweise ein Helikopter, welcher das System zum Ausrichten nach einem der Ansprüche 15 bis 30 anwendet und/oder eine Vorrichtung (6) gemäß Anspruch 35 aufweist, **dadurch gekennzeichnet, dass** dieses Luftfahrzeug (1) ein Haupttransmissionsgehäuse mit einer Kuppelvorrichtung eines Systems (5) zur automatisierten Ausrichtung aufweist, sowie eine Bremse (8), die einen Trägerrotor (3) der Hauptblätter (2) feststellen kann, beispielsweise eine elektrische Bremse, und wobei im Inneren einer Pilotenkanzel Mittel zum manuellen (70) und/oder automatischen Steuern der Neigung der Blätter (2) vorgesehen ist.

**Fig. 1**

**Fig. 2**

**Fig. 3**

**Fig. 4**

**Fig. 5**

Fig. 6

Fig. 7

EP 1 752 672 B1

Fig. 8

Fig. 9

**Fig. 10**

**Fig. 11**

**Fig. 12**

**Fig. 13**

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2861689
- FR 1587156
- GB 781356 A
- GB 1036028 A
- GB 1059638 A
- US 2880810 A
- FR 2402123
- FR 2670553